# EUROPEAN PATENT SPECIFICATION

(11) **EP 3 466 722 B1**
(45) Date of publication and mention of the grant of the patent: **15.04.2020**
(21) Application number: 17802368.5
(22) Date of filing: 22.02.2017
(51) Int. Cl.: B60C 11/00, B60C 1/00, B60C 5/01, B60C 9/20, B60C 9/22, C08K 3/04, C08K 3/36, C08L 7/00, C08L 9/00, C08L 101/00, B60C 9/02, B60C 5/00

(54) **TIRE**
REIFEN
PNEUMATIQUE

(30) Priority: 26.05.2016 JP 2016105704
(43) Date of publication of application: 10.04.2019
(73) Proprietor: Bridgestone Corporation, Tokyo 104-8340 (JP)
(72) Inventor: KAWASHIMA, Keisuke, Tokyo 104-8340 (JP)
(74) Representative: Oxley, Robin John George
(86) International application number: PCT/JP2017/006605
(87) International publication number: WO 2017/203766

(56) References cited:
- WO-A1-2010/095688
- WO-A1-2015/182152
- JP-A- 2002 179 842
- JP-A- 2007 045 273
- JP-A- 2012 006 452
- JP-A- 2012 092 179
- JP-A- 2014 189 084

## Description

### TECHNICAL FIELD

The present disclosure relates to a tire.

### BACKGROUND

Demand for vehicles with lower fuel consumption is continuing to grow with the global movement toward reduction in carbon dioxide emissions, resulting from increasing recent interest in environmental issues. In order to respond to such demand, there is also a need to improve tire performance by reducing rolling resistance. When developing a rubber composition for use in a tire tread, which contributes to the rolling resistance of a tire, it is generally effective to use the loss tangent (tan δ) at around 60°C as an indicator in consideration of the fact that the temperature of a tire during normal running reaches approximately 60°C. Specifically, when a rubber composition having a low tan δ at around 60°C is used in tread rubber, heat buildup in a tire can be inhibited, rolling resistance can be reduced, and, as a result, fuel efficiency of the tire can be improved (PTL 1).

It is also important to ensure running performance on a wet road surface (hereinafter, referred to simply as "wet performance") in order to enable safer running of a vehicle. Accordingly, there is demand for improved tire wet performance in addition to improved tire fuel efficiency. In response to this demand, PTL 2, shown below, discloses a technique for improving wet performance in which tan δ at 0°C of a rubber composition for a tire tread is set as at least 0.95.

However, simply using a rubber composition having a high tan δ at 0°C in tread rubber in order to improve wet performance of a tire is problematic since it reduces fuel efficiency of the tire as a result of tan δ at 60°C, which is related to tire fuel efficiency, also being high.

On the other hand, tires in which resin materials, such as thermoplastic resins and thermoplastic elastomers, are used are being developed due to the light weight and ease of recycling of such tires. In one example, PTL 3, shown below, discloses a tire that includes a reinforcement cord layer (reinforcement layer) at an outer circumference of a tire frame having an annular shape, wherein the tire frame is formed from a resin material, and also discloses a tire in which the reinforcement layer is also formed using a resin material. It is anticipated that tire fuel efficiency can be improved in a situation in which a resin material is used in a tire frame or reinforcement layer since a resin material has a lower loss tangent (tan δ) than a normal rubber. Reference is also made to JP 2014-189084 A, which discloses a tire comprising a tire frame having an annular shape; a reinforcement layer located outward of the tire frame in a tire radial direction; and tread rubber located outward of the reinforcement layer in the tire radial direction, wherein the reinforcement layer includes a reinforcement member that is coated with a resin composition containing from 50 mass% to 100 mass% of a resin material.

### CITATION LIST

### Patent Literature

PTL 1: JP 2012-092179 A
PTL 2: JP 2014-009324 A
PTL 3: JP 2012-046030 A

### SUMMARY

### (Technical Problem)

As explained above, it is anticipated that a tire in which a resin material is used for a tire frame or a reinforcement layer as described in PTL 3 will have improved fuel efficiency. However, physical properties of a resin member change significantly depending on the temperature. Consequently, when the resin member is exposed to a cold environment, particularly during the winter, the resin member may harden and negatively affect ride comfort of a tire. One method that may be considered in order to compensate for this problem is to lower the glass transition temperature (Tg) of tread rubber so that the tread rubber is softer in a low-temperature region. However, lowering the glass transition temperature (Tg) of the tread rubber causes deterioration of wet performance of the tire. Moreover, the achievement of a balance with handling performance on a dry road surface (hereinafter, referred to simply as "dry handling performance") remains an issue.

An objective of the present disclosure is to solve the problems experienced by the conventional techniques described above and provide a tire having good fuel efficiency that, even though a resin material is used therein, has improved ride comfort and dry handling performance without deterioration of wet performance.

### (Solution to Problem)

The following describes the main features that are disclosed herein for solving the aforementioned problems.

A presently disclosed tire comprises: a tire frame having an annular shape; a reinforcement layer located outward of the tire frame in a tire radial direction; and tread rubber located outward of the reinforcement layer in the tire radial direction, wherein
the reinforcement layer includes a reinforcement member that is coated with a resin composition containing from 50 mass% to 100 mass% of a resin material,
characterized in that a storage modulus (E'_{0°C}) of the tread rubber during 1% strain at 0°C under conditions of an initial load of 160 mg and a frequency of 52 Hz is no greater than 30 MPa, a loss tangent (tan δ_{0°C}) of the tread rubber during 1% strain at 0°C under conditions of an initial load of 160 mg and a frequency of 52 Hz is no greater than 0.5, and a value (tan δ_{30°C} - tan δ_{60°C}) obtained by subtracting a loss tangent (tan δ_{60°C}) of the tread rubber during 1% strain at 60°C under conditions of an initial load of 160 mg and a frequency of 52 Hz from a loss tangent (tan δ_{30°C}) of the tread rubber during 1% strain at 30°C under conditions of an initial load of 160 mg and a frequency of 52 Hz is no greater than 0.08.

The presently disclosed tire described above has good fuel efficiency and, even though a resin material is used therein, has improved ride comfort and dry handling performance without deterioration of wet performance.

In one preferable example of the presently disclosed tire, a rubber composition containing from 5 parts by mass to 40 parts by mass in total of at least one selected from the group consisting of a thermoplastic resin and a softener relative to 100 parts by mass of a rubber component including at least 50 mass% of at least one isoprene-based rubber selected from the group consisting of natural rubber and synthetic isoprene rubber is used in the tread rubber. In such a situation, deterioration of wet performance of the tire is reliably suppressed.

The rubber composition used in the tread rubber preferably has an organic acid content of from 0.5 mass% to 2.5 mass%. In such a situation, sufficient durability of the reinforcement layer and the tire frame can be ensured while enabling optimal vulcanization of the rubber composition used in the tread rubber.

The rubber composition used in the tread rubber preferably contains from 0.3 parts by mass to 5.0 parts by mass of a vulcanization accelerator relative to 100 parts by mass of the rubber component. In such a situation, sufficient durability of the reinforcement layer and the tire frame can be ensured while enabling optimal vulcanization of the rubber composition used in the tread rubber.

The rubber composition used in the tread rubber preferably contains a filler including at least 70 mass% of silica. In such a situation, fuel efficiency of the tire is improved.

In another preferable example of the presently disclosed tire, a value (tan δ_{0°C} - tan δ_{30°C}) obtained by subtracting the loss tangent (tan δ_{30°C}) of the tread rubber during 1% strain at 30°C from the loss tangent (tan 8ooe) of the tread rubber during 1% strain at 0°C is no greater than 0.30. In such a situation, temperature dependence of fuel efficiency of the tire can be reduced while improving wet performance of the tire.

In another preferable example of the presently disclosed tire, a value (tan δ_{0°C} - tan δ_{60°C}) obtained by subtracting the loss tangent (tan δ_{60°C}) of the tread rubber during 1% strain at 60°C from the loss tangent (tan δ_{0°C}) of the tread rubber during 1% strain at 0°C is no greater than 0.35. In such a situation, temperature dependence of fuel efficiency of the tire can be reduced.

The rubber composition used in the tread rubber preferably contains from 1 part by mass to 5 parts by mass of the softener relative to 100 parts by mass of the rubber component. In such a situation, sufficient rigidity of the rubber composition used in the tread rubber can be ensured while facilitating kneading of the rubber composition.

The softener contained in the rubber composition used in the tread rubber is preferably a mineral-derived softener or a petroleum-derived softener. In such a situation, the rubber composition used in the tread rubber can be kneaded even more easily.

The rubber composition used in the tread rubber preferably contains from 40 parts by mass to 70 parts by mass of the silica relative to 100 parts by mass of the rubber component. In such a situation, fuel efficiency of the tire during normal running and wet performance of the tire can be improved.

The filler contained in the rubber composition used in the tread rubber preferably further includes carbon black and the carbon black is preferably contained in an amount of from 1 part by mass to 10 parts by mass relative to 100 parts by mass of the rubber component. In such a situation, the tire can be provided with high levels of both fuel efficiency and wet performance.

The thermoplastic resin contained in the rubber composition used in the tread rubber is preferably at least one resin selected from the group consisting of a C₅ resin, a C₉ resin, a C₅-C₉ resin, a dicyclopentadiene resin, a rosin resin, an alkyl phenolic resin, and a terpene phenolic resin. In such a situation, wet performance of the tire can be further improved.

In another preferable example of the presently disclosed tire, the reinforcement layer includes at least a reinforcement member that is wound in a tire circumferential direction. In such a situation, puncture resistance, cut resistance, and circumferential direction rigidity of the tire are improved.

In another preferable example of the presently disclosed tire, the tire frame is formed from a resin composition containing from 50 mass% to 100 mass% of a resin material. In such a situation, the tire can be recycled more easily.

In another preferable example of the presently disclosed tire, either or both of the reinforcement layer and the tire frame are formed using a resin composition that contains at least one of a thermoplastic resin and a thermoplastic elastomer. In such a situation, the reinforcement layer and/or the tire frame can be recycled even more easily.

The at least one of the thermoplastic resin and the thermoplastic elastomer contained in the resin composition used in either or both of the reinforcement layer and the tire frame is preferably polyamide based, polyester based, or polyurethane based. In such a situation, durability of the reinforcement layer and/or the tire frame against strain input is improved.

Preferably, the presently disclosed tire further comprises a carcass located outward of the tire frame and the reinforcement layer in the tire radial direction. In such a situation, problems caused by poor adhesion are less likely to occur and the amount of migration to the resin material of chemicals or the like that are compounded in the rubber can be reduced.

### (Advantageous Effect)

According to the present disclosure, it is possible to provide a tire having good fuel efficiency that, even though a resin material is used therein, has improved ride comfort and dry handling performance without deterioration of wet performance.

### BRIEF DESCRIPTION OF THE DRAWING

In the accompanying drawing,

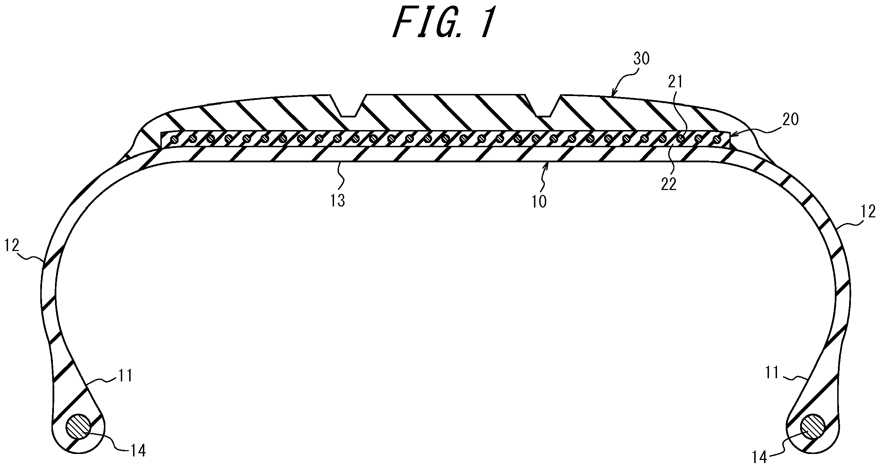

FIG. 1 is a cross-sectional view of an embodiment of the presently disclosed tire.

### DETAILED DESCRIPTION

The following provides an illustrative and detailed description of the presently disclosed tire based on embodiments thereof.

FIG. 1 is a cross-sectional view of an embodiment of the presently disclosed tire. The tire illustrated in FIG. 1 includes a tire frame 10, a reinforcement layer 20 located outward of the tire frame 10 in a tire radial direction, and tread rubber 30 located outward of the reinforcement layer 20 in the tire radial direction.

The tire frame 10 of the tire illustrated in FIG. 1 has an annular shape and, in a tire width direction cross-section thereof, includes a pair of bead portions 11, a pair of side portions 12 that continue outward from the bead portions 11 in the tire radial direction, and a crown portion 13 that continues inward from the side portions 12 in the tire width direction and that connects the side portions 12 to one another at the respective outer edges thereof in the tire radial direction. The reinforcement layer 20 is located outward of the crown portion 13 in the tire radial direction. The bead portions 11 may for example each have an annular bead core 14 embedded therein in the same way as in a normal tire. Steel cord or the like may be used in the bead cores 14.

The reinforcement layer 20 of the tire illustrated in FIG. 1 includes a reinforcement member 21 and a coating layer 22 that coats the reinforcement member 21. A resin composition containing from 50 mass% to 100 mass% of a resin material is used in the coating layer 22 of the reinforcement layer 20. Herein, when the term "resin" is used alone, "resin" is a concept that is inclusive of thermoplastic resins, thermoplastic elastomers, and thermosetting resins, but exclusive of vulcanized rubbers.

The tread rubber 30 illustrated in FIG. 1 has a storage modulus (E'_{0°C}) during 1% strain at 0°C of no greater than 30 MPa and a loss tangent (tan δ_{0°C}) during 1% strain at 0°C of no greater than 0.5. Moreover, a value (tan δ_{30°C} - tan δ_{60°C}) obtained by subtracting a loss tangent (tan δ_{60°C}) of the tread rubber 30 during 1% strain at 60°C from a loss tangent (tan δ_{30°C}) of the tread rubber 30 during 1% strain at 30°C is no greater than 0.08.

As a result of the storage modulus (E'_{0°C}) of the tread rubber 30 during 1% strain at 0°C being no greater than 30 MPa, flexibility at low temperatures can be increased and ride comfort of the tire can be improved. Moreover, since the tread rubber 30 is softer in a low temperature region as a result of having a storage modulus (E'_{0°C}) during 1% strain at 0°C of no greater than 30 MPa, it is possible to suppress deterioration of wet performance of the tire.

Furthermore, as a result of the loss tangent (tan δ_{0°C}) of the tread rubber 30 during 1% strain at 0°C being no greater than 0.5, fuel efficiency of the tire at low temperatures is improved. It is not possible to sufficiently improve fuel efficiency of the tire at low temperatures if tan δ_{0°C} of the tread rubber 30 is greater than 0.5.

Also, as a result of the value (tan δ_{30°C} - tan δ_{60°C}) obtained by subtracting the loss tangent (tan δ_{60°C}) of the tread rubber 30 during 1% strain at 60°C from the loss tangent (tan δ_{30°C}) of the tread rubber 30 during 1% strain at 30°C being no greater than 0.08, temperature dependence of the loss tangent (tan δ) is reduced, which enables improvement of fuel efficiency of the tire over a wide temperature range.

Moreover, as a result of this tread rubber 30 being adopted, handling performance of the tire on a dry road surface can be improved.

The storage modulus (E'_{0°C}) of the tread rubber 30 during 1% strain at 0°C is no greater than 30 MPa and, from a viewpoint of improving wet performance, is preferably no greater than 20 MPa, more preferably no greater than 18 MPa, even more preferably no greater than 16 MPa, and most preferably no greater than 10 MPa, and is preferably at least 3 MPa, and more preferably at least 5 MPa.

The loss tangent (tan δ_{0°C}) of the tread rubber 30 during 1% strain at 0°C is no greater than 0.5 and, from a viewpoint of improving fuel efficiency at low temperatures, is preferably no greater than 0.45, and more preferably no greater than 0.4. Although there are no specific restrictions on the lower limit for tan δ_{0°C}, tan 8_{0°C} is normally at least 0.15.

The loss tangent (tan δ_{30°C}) of the tread rubber 30 during 1% strain at 30°C is preferably no greater than 0.4, and more preferably no greater than 0.35, and is normally at least 0.1. Moreover, the loss tangent (tan δ_{60°C}) of the tread rubber 30 during 1% strain at 60°C is preferably no greater than 0.35, and more preferably no greater than 0.3, and is normally at least 0.05. In such a situation, fuel efficiency of the tire can be improved over a wide temperature range.

The value (tan δ_{30°C} - tan δ_{60°C}) obtained by subtracting the loss tangent (tan δ_{60°C}) of the tread rubber 30 during 1% strain at 60°C from the loss tangent (tan δ_{30°C}) of the tread rubber 30 during 1% strain at 30°C is no greater than 0.08 and, from a viewpoint of further reducing temperature dependence of fuel efficiency, is preferably no greater than 0.070, more preferably no greater than 0.060, even more preferably no greater than 0.055, and particularly preferably no greater than 0.050. It is not possible to sufficiently reduce temperature dependence of fuel efficiency of the tire if tan δ_{30°C} - tan δ_{60°C} is greater than 0.080.

From a viewpoint of improving wet performance and reducing temperature dependence of fuel efficiency, a value (tan δ_{0°C} - tan δ_{30°C}) obtained by subtracting the loss tangent (tan δ_{30°C}) of the tread rubber 30 during 1% strain at 30°C from the loss tangent (tan δ_{0°C}) of the tread rubber 30 during 1% strain at 0°C is preferably no greater than 0.30, more preferably from 0.14 to 0.30, even more preferably from 0.15 to 0.25, and particularly preferably from 0.16 to 0.20.

Moreover, from a viewpoint of reducing temperature dependence of fuel efficiency, a value (tan δ_{0°C} - tan δ_{60°C}) obtained by subtracting the loss tangent (tan δ_{60°C}) of the tread rubber 30 during 1% strain at 60 °C from the loss tangent (tan δ_{0°C}) of the tread rubber 30 during 1% strain at 0°C is preferably no greater than 0.35, more preferably no greater than 0.24, and even more preferably no greater than 0.23. Note that the difference between tan δ_{0°C} and tan δ_{60°C} may be 0.

From a viewpoint of improving wet performance, the tensile strength (Tb) of the tread rubber 30 is preferably at least 20 MPa, and more preferably at least 23 MPa. When the tread rubber 30 has a tensile strength of at least 20 MPa, rigidity of the tread rubber as a whole can be improved and wet performance can be further improved.

A rubber composition in which the types and blending ratio of rubber components and the types and amounts of compounding agents are adjusted such that the post-vulcanization physical properties of the rubber composition satisfy the ranges described above for E'_{0°C}, tan δ_{0°C}, and tan δ_{30°C} - tan δ_{60°C} can be used in the tread rubber 30.

In one example, a rubber composition containing from 5 parts by mass to 40 parts by mass in total of at least one selected from the group consisting of a thermoplastic resin and a softener relative to 100 parts by mass of a rubber component including at least 50 mass% of at least one isoprene-based rubber selected from the group consisting of natural rubber and synthetic isoprene rubber is preferably used in the tread rubber 30.

When a rubber composition containing a thermoplastic resin is used in the tread rubber, the elastic modulus of the tread rubber in a high-strain region can be lowered while suppressing lowering of the elastic modulus of the tread rubber in a low-strain region, and rigidity can be ensured in a portion of the tread rubber that is distant from a contact patch with a road surface, which is a portion in which strain during running is small, while increasing the deformation volume of the tread rubber near to the contact patch with the road surface, where strain during running is large. The coefficient of friction (µ) on a wet road surface is proportional to the product of rigidity of the tread rubber as a whole, the amount of deformation of the tread rubber, and the loss tangent (tan δ) of the tread rubber. Therefore, even in a situation in which tan δ_{0°C} is lowered to no greater than 0.5, the coefficient of friction (µ) on a wet road surface can be sufficiently maintained and deterioration of wet performance can be suppressed by increasing the amount of deformation of the tread rubber while ensuring rigidity of the tread rubber as a whole.

Moreover, deterioration of wet performance of the tire can also be suppressed by using a rubber composition containing a softener in the tread rubber since this has an effect of making the tread rubber 30 softer in a low temperature region.

Moreover, deterioration of wet performance of the tire can be reliably suppressed through compounding of from 5 mass% to 40 mass% in total of the thermoplastic resin and/or softener.

Besides natural rubber (NR) and synthetic isoprene rubber (IR), the rubber component used in the rubber composition for the tread rubber may include a synthetic diene-based rubber such as polybutadiene rubber (BR), styrene-butadiene copolymer rubber (SBR), or styrene-isoprene copolymer rubber (SIR), or may include another type of synthetic rubber. One of such rubber components may be used individually, or two or more of such rubber components may be used as a blend.

The thermoplastic resin compounded in the rubber composition for the tread rubber is preferably a C₅ resin, a C₉ resin, a C₅-C₉ resin, a dicyclopentadiene resin, a rosin resin, an alkyl phenolic resin, or a terpene phenolic resin from a viewpoint of improving wet performance. One of such thermoplastic resins may be used individually, or two or more of such thermoplastic resins may be used in combination.

The term "C₅ resin" refers to a C₅ synthetic petroleum resin. The C₅ resin may for example be an aliphatic petroleum resin that is obtained by using a Friedel-Crafts catalyst, such as AlCl₃ or BF₃, to polymerize a C₅ fraction obtained by thermal cracking of naphtha in the petrochemical industry. The aforementioned C₅ fraction typically includes olefinic hydrocarbons such as 1-pentene, 2-pentene, 2-methyl-1-butene, 2-methyl-2-butene, and 3-methyl-1-butene; diolefinic hydrocarbons such as 2-methyl-1,3-butadiene, 1,2-pentadiene, 1,3-pentadiene, and 3-methyl-1,2-butadiene; and the like. The C₅ resin may be a commercially available product. Examples include products from the "Escorez® 1000" series (Escorez is a registered trademark in Japan, other countries, or both), which are aliphatic petroleum resins produced by ExxonMobil Chemical Company, and the products "A100", "B170", "M100", and "R100" from the "Quinton® 100" series (Quinton is a registered trademark in Japan, other countries, or both), which are aliphatic petroleum resins produced by Nippon Zeon Co., Ltd.

The C₉ resin may for example be a resin obtained by polymerizing aromatics having a carbon number 9, the main monomers for which are vinyl toluene, alkyl styrenes, and indene, of a C₉ fraction that is obtained through thermal cracking of naphtha in the petrochemical industry as a by-product of basic petrochemical raw materials, such as ethylene and propylene. Specific examples of the C₉ fraction obtained through thermal cracking of naphtha include vinyltoluene, α-methylstyrene, β-methylstyrene, γ-methylstyrene, o-methylstyrene, p-methylstyrene, and indene. In addition to the C₉ fraction, styrene and the like of a C₈ fraction, methylindene, 1,3-dimethylstyrene, and the like of a C₁₀ fraction, and naphthalene, vinylnaphthalene, vinyl anthracene, p-tert-butylstyrene, and the like may be used as a raw material for the C₉ resin, and the C₉ resin may be obtained, for example, by using a Friedel-Crafts catalyst to copolymerize a mixture of these C₈-C₁₀ fractions and the like. Moreover, the C₉ resin may be a modified petroleum resin obtained through modification with a hydroxyl group-containing compound, an unsaturated carboxylic acid, or the like. The C₉ resin may be a commercially available product. Examples of commercially available unmodified C₉ petroleum resins include the products "Nisseki Neopolymer® L-90" (Nisseki Neopolymer is a registered trademark in Japan, other countries, or both), "Nisseki Neopolymer® 120", "Nisseki Neopolymer® 130", and "Nisseki Neopolymer® 140" (produced by JX Nippon Oil & Energy Corporation).

The term "C₅-C₉ resin" refers to a C₅-C₉ synthetic petroleum resin. The C₅-C₉ resin may for example be a solid polymer obtained by using a Friedel-Crafts catalyst, such as AlCl₃ or BF₃, to polymerize a C₅ fraction and a C₉ fraction derived from petroleum. Specific examples include copolymers having styrene, vinyltoluene, α-methylstyrene, indene, or the like as a main component. From a viewpoint of compatibility with the rubber component, it is preferable that the C₅-C₉ resin is a resin in which the amount of components of C₉ or higher is small. Herein, the phrase "the amount of components of C₉ or higher is small" means that components of C₉ or higher compose less than 50 mass%, and preferably no greater than 40 mass%, of the total amount of the resin. The C₅-C₉ resin may be a commercially available product. Examples include the product "Quinton® G100B" (produced by Nippon Zeon Co., Ltd.) and the product "ECR213" (produced by ExxonMobil Chemical Company).

The dicyclopentadiene resin is a petroleum resin that is produced using dicyclopentadiene obtained through dimerization of cyclopentadiene as a main raw material. The dicyclopentadiene resin may be a commercially available product. Examples include the products "1105", "1325", and "1340" from the "Quinton® 1000" series, which are alicyclic petroleum resins produced by Nippon Zeon Co., Ltd.

The rosin resin may be a natural resin having a rosin acid (for example, abietic acid, palustric acid, or isopimaric acid) as a main component, or may be a modified resin or hydrogenated resin produced by subjecting a natural resin such as mentioned above to modification or hydrogen addition. The rosin resin is obtained as a residue after distilling turpentine from collected balsam such as pine resin, which is the sap from a plant of the pine family. Examples include natural resin rosin, or a polymerized rosin or partially hydrogenated rosin thereof; a glycerin ester rosin, or a partially hydrogenated rosin, completely hydrogenated rosin, or polymerized rosin thereof; and a pentaerythritol ester rosin, or a partially hydrogenated rosin or polymerized rosin thereof. The natural resin rosin may for example be gum rosin, tall oil rosin, or wood rosin contained in raw rosin or tall oil. The rosin resin may be a commercially available product. Examples include the product "NEOTALL 105" (produced by Harima Chemicals Group, Inc.), the product "SN-TACK 754" (produced by San Nopco Limited), the products "Lime Resin No. 1", "PENSEL A", and "PENSEL AD" (produced by Arakawa Chemical Industries, Ltd.), the products "Poly-Pale" and "Pentalyn C" (produced by Eastman Chemical Company), and the product "Highrosin® S" (Highrosin is a registered trademark in Japan, other countries, or both) (produced by Taishamatsu essential oil Co., Ltd.).

The alkyl phenolic resin can for example be obtained through a condensation reaction of an alkyl phenol and formaldehyde in the presence of a catalyst. The alkyl phenolic resin may be a commercially available product. Examples include the product "Hitanol 1502P" (produced by Hitachi Chemical Co., Ltd.), the product "TAKIROL 201" (produced by Taoka Chemical Co., Ltd.), the product "TAKIROL 250-1" (brominated alkyl phenol-formaldehyde resin, produced by Taoka Chemical Co., Ltd.), the product "TAKIROL 250-III" (brominated alkyl phenol-formaldehyde resin, produced by Taoka Chemical Co., Ltd.), and the products "R7521P", "SP1068", "R7510PJ", "R7572P", and "R7578P" (produced by SI Group, Inc.).

The terpene phenolic resin can for example be obtained by causing a terpene and various phenols to react using a Friedel-Crafts catalyst, or by further condensing the resultant product with formalin. Although no specific limitations are placed on the terpene used as a raw material, the terpene is preferably a monoterpene hydrocarbon such as α-pinene or limonene, more preferably includes α-pinene, and is particularly preferably α-pinene. The terpene phenolic resin may be a commercially available product. Examples include the products "TAMANOL 803L" and "TAMANOL 901" (produced by Arakawa Chemical Industries, Ltd.) and products from the "YS POLYSTER® U" series (YS POLYSTER is a registered trademark in Japan, other countries, or both), the "YS POLYSTER® T" series, the "YS POLYSTER® S" series, the "YS POLYSTER® G" series, the "YS POLYSTER® N" series, the "YS POLYSTER® K" series, and the "YS POLYSTER® TH" series (produced by Yasuhara Chemical Co., Ltd.).

From a viewpoint of improving wet performance, the amount of the thermoplastic resin that is compounded relative to 100 parts by mass of the rubber component in the rubber composition for the tread rubber is preferably in a range of from 5 parts by mass to 40 parts, more preferably from 8 parts by mass to 30 parts by mass, and even more preferably from 10 parts by mass to 20 parts by mass. Compounding of at least 5 parts by mass of the thermoplastic resin relative to 100 parts by mass of the rubber component enables lowering of the elastic modulus of the rubber composition in a high strain region, whereas compounding of no greater than 40 parts by mass suppresses lowering of the elastic modulus of the rubber composition in a low strain region.

Examples of softeners that can be compounded in the rubber composition for the tread rubber include mineral-derived mineral oil, petroleum-derived aromatic oil, paraffinic oil, and naphthenic oil, and natural product-derived palm oil, among which, mineral-derived softeners and petroleum-derived softeners are preferable from a viewpoint of wet performance of the tire.

From a viewpoint of processability, operability, and suppressing a decrease in rigidity of the rubber composition, the amount of the softener that is compounded in the rubber composition for the tread rubber is preferably from 1 part by mass to 5 parts by mass, and more preferably from 1.5 parts by mass to 3 parts by mass. Compounding of at least 1 part by mass of the softener facilitates kneading of the rubber composition, whereas compounding of no greater than 5 parts by mass of the softener suppresses a decrease in rigidity of the rubber composition.

The rubber composition used in the tread rubber preferably further contains a filler. The amount of the filler that is compounded relative to 100 parts by mass of the rubber component is preferably from 30 parts by mass to 100 parts by mass, and more preferably from 40 parts by mass to 80 parts by mass. When the amount of the filler in the rubber composition is within the range described above, wet performance of the tire and fuel efficiency of the tire in a low temperature environment can be improved.

Silica is preferably used as the filler. The percentage of the silica in the filler is preferably at least 70 mass%, more preferably at least 80 mass%, and even more preferably at least 90 mass%. Moreover, the filler may be composed entirely of silica. The inclusion of silica in the rubber composition as a filler lowers tan δ_{60°C} and improves fuel efficiency of the tire. Moreover, tan δ_{60°C} is further lowered and fuel efficiency of the tire is further improved when the percentage of the silica in the filler is at least 70 mass%.

No specific limitations are placed on the silica, which may for example be wet silica (hydrous silica), dry silica (anhydrous silica), calcium silicate, or aluminum silicate. Among these example, wet silica is preferable. One of these types of silica may be used individually, or two or more of these types of silica may be used together.

The amount of silica that is compounded relative to 100 parts by mass of the rubber component in the rubber composition used in the tread rubber is preferably in a range of from 40 parts by mass to 70 parts, and more preferably in a range of from 45 parts by mass to 60 parts. Compounding of at least 40 parts by mass of silica relative to 100 parts by mass of the rubber component can lower tan δ_{60°C} and further improve fuel efficiency of the tire, whereas compounding of no greater than 70 parts by mass can increase the flexibility and deformation volume of the tread rubber, and thereby further improve wet performance of the tire.

The rubber composition used in the tread rubber preferably further contains carbon black as the filler. The amount of carbon black that is compounded relative to 100 parts by mass of the rubber component is preferably in a range of from 1 part by mass to 10 parts by mass, and more preferably in a range from 3 parts by mass to 8 parts by mass. Compounding of at least 1 part by mass of carbon black can improve rigidity of the tread rubber, whereas compounding of no greater than 10 parts by mass of carbon black enables high levels of both fuel efficiency and wet performance of the tire by suppressing a rise in tan δ.

No specific limitations are placed on the carbon black, which may for example be GPF, FEF, HAF, ISAF, or SAF grade carbon black. Among these examples, ISAF and SAF grade carbon black are preferable from a viewpoint of improving wet performance of the tire. One of these types of carbon black may be used individually, or two or more of these types of carbon black may be used together.

Besides the silica and carbon black described above, the filler may include aluminum hydroxide, alumina, clay, calcium carbonate, or the like.

The rubber composition used in the tread rubber preferably further contains a silane coupling agent in order to enhance the compounding effect of silica. Examples of silane coupling agents that can be used include, but are not specifically limited to, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyltetrasulfide. One of such silane coupling agents may be used individually, or two or more of such silane coupling agents may be used in combination.

The amount of the silane coupling agent that is compounded relative to 100 parts by mass of the silica is preferably in a range of from 2 parts by mass to 20 parts by mass, and more preferably in a range of from 5 parts by mass to 15 parts by mass. Compounding of at least 2 parts by mass of the silane coupling agent relative to 100 parts by mass of the silica sufficiently enhances the compounding effect of the silica, whereas compounding of no greater than 20 parts by mass of silane coupling agent relative to 100 parts by mass of the silica reduces the probability of gelling of the rubber component occurring.

The rubber composition used in the tread rubber may further contain a fatty acid metal salt. The metal in the fatty acid metal salt may for example be Zn, K, Ca, Na, Mg, Co, Ni, Ba, Fe, Al, Cu, or Mn, and is preferably Zn. On the other hand, the fatty acid in the fatty acid metal salt may for example be a saturated or unsaturated fatty acid having a carbon number of 4-30 and a linear, branched, or cyclic structure, or may be a mixture of such fatty acids. Among these fatty acids, a saturated or unsaturated linear fatty acid having a carbon number of 10-22 is preferable. Examples of saturated linear fatty acids having a carbon number of 10-22 include lauric acid, myristic acid, palmitic acid, and stearic acid, and examples of unsaturated linear fatty acids having a carbon number of 10-22 include oleic acid, linoleic acid, linolenic acid, and arachidonic acid. One fatty acid metal salt may be used individually, or two or more fatty acid metal salts may be used in combination.

The amount of the fatty acid metal salt that is compounded relative to 100 parts by mass of the rubber component is preferably in a range of from 0.1 parts by mass to 10 parts by mass, and more preferably in a range of from 0.5 parts by mass to 5 parts by mass.

Besides the rubber component, the thermoplastic resin, the softener, the filler, the silane coupling agent, and the fatty acid metal salt described above, the rubber composition used in the tread rubber may contain compounding agents normally used in the rubber industry, such as stearic acid, antioxidants, zinc oxide, vulcanization accelerators, and vulcanizing agents, that are appropriately selected so as to not impair the objectives of the present disclosure. Commercially available products can be suitably used as these compounding agents. However, from a viewpoint of lowering the storage modulus (E'_{0°C}) of the tread rubber during 1% strain at 0°C, the rubber composition preferably does not contain a thermosetting resin such as a novolac-type or resol-type phenolic resin or a resorcinol resin.

The rubber composition described above for which the loss tangent (tan δ_{0°C}) during 1% strain at 0°C is no greater than 0.5 and the value (tan δ_{30°C} - tan δ_{60°C}) obtained by subtracting the loss tangent (tan δ_{60°C}) during 1% strain at 60°C from the loss tangent (tan δ_{30°C}) during 1% strain at 30°C is no greater than 0.08 is preferably produced through a process in which the rubber component, the thermoplastic resin, and the filler are kneaded at from 150°C to 165°C without a vulcanization compounding agent including a vulcanizing agent and a vulcanization accelerator.

As a result of the kneading being carried out at from 150°C to 165°C without the vulcanization compounding agent, compounding agents other than the vulcanization compounding agent can be homogeneously dispersed in the rubber component while avoiding premature vulcanization (scorching), and thus the compounding effect of each of the compounding agents can be sufficiently exhibited, and tan δ_{30°C} - tan δ_{60°C} of the rubber composition can be reduced while also lowering tan δ_{0°C} of the rubber composition.

It should be noted that the loss tangent (tan δ), the differences between tan δ at various temperatures, the storage modulus (E'), and the tensile strength (Tb) of the rubber composition can for example be altered by adjusting the kneading temperature described above; the type and blending ratio of the rubber component; the type and amount of the thermoplastic resin; the type and amount of the softener; the percentage and type of silica in the filler; and the types and amounts of other compounding agents.

After the rubber composition has been kneaded at from 150°C to 165°C, the rubber composition is preferably kneaded with the vulcanization compounding agent at a different temperature that is lower than 150°C. The vulcanization compounding agent including the vulcanizing agent and the vulcanization accelerator is preferably added to the rubber composition after the compounding agents other than the vulcanization compounding agent have been homogeneously dispersed in the rubber composition to a sufficient extent, and is preferably kneaded with the rubber composition at a temperature that prevents premature vulcanization (scorching), such as from 90°C to 120°C.

In production of the rubber composition, the kneading time of kneading at each temperature can be set as appropriate, without any limitations, in consideration of the size of the kneading device, the volumes of raw materials, the types and states of the raw materials, and so forth.

The vulcanizing agent may for example be sulfur. The amount of the vulcanizing agent, in terms of sulfur content, that is compounded relative to 100 parts by mass of the rubber component is preferably in a range of from 0.1 parts by mass to 10 parts by mass, and more preferably in a range of from 1 part by mass to 4 parts by mass. Compounding of the vulcanizing agent with a sulfur content of at least 0.1 parts by mass ensures fracture strength, wear resistance, and the like of the vulcanized rubber, whereas compounding of the vulcanizing agent with a sulfur content of no greater than 10 parts by mass ensures sufficient rubber elasticity. In particular, compounding of the vulcanizing agent with a sulfur content of no greater than 4 parts by mass enables further improvement of wet performance of the tire.

Examples of vulcanization accelerators that can be used include, but are not specifically limited to, thiazole vulcanization accelerators such as 2-mercaptobenzothiazole (M), dibenzothiazolyl disulfide (DM), N-cyclohexyl-2-benzothiazolylsulfenamide (CZ), and N-tert-butyl-2-benzothiazolylsulfenamide (NS), and guanidine vulcanization accelerators such as 1,3-diphenylguanidine (DPG). The rubber composition in the presently disclosed tire preferably contains three types of vulcanization accelerators.

The rubber composition can for example be produced by kneading the rubber component with various compounding agents, which are appropriately selected as necessary, using a Banbury mixer, a roller, or the like, and then performing warming, extrusion, and so forth. The tread rubber can then be produced by shaping the rubber composition into a desired shape and carrying out vulcanization. Vulcanization of the tread rubber may be carried out after shaping the tire from the tire frame, the reinforcement layer, and the unvulcanized tread rubber, or the unvulcanized tread rubber may be vulcanized in advance before assembling the tire from the tire frame, the reinforcement layer, and the vulcanized tread rubber.

The organic acid content of the rubber composition used in the tread rubber 30 is preferably from 0.5 mass% to 2.5 mass%, and more preferably from 1.2 mass% to 2.5 mass%. In the rubber composition used in the tread rubber 30, an organic acid content of at least 0.5 mass% enables optimal vulcanization of the rubber composition, whereas an organic acid content of no greater than 2.5 mass% limits the influence of the organic acid on the reinforcement layer 20 in which the resin material is used and the tire frame 10 that is located inward of the reinforcement layer 20 in the tire radial direction, and thereby ensures sufficient durability of the reinforcement layer 20 and the tire frame 10.

It should be noted that besides stearic acid or the like that may be used as a compounding agent as previously described, the organic acid in the rubber composition may for example include an organic acid contained in natural rubber or the like that may be used as the rubber component.

The amount of the vulcanization accelerator that is compounded relative to 100 parts by mass of the rubber component in the rubber composition used in the tread rubber 30 is preferably from 0.3 parts by mass to 5.0 parts by mass, and more preferably from 1.0 parts by mass to 4.0 parts by mass. In the rubber composition used in the tread rubber 30, compounding of at least 0.3 parts by mass of the vulcanization accelerator relative to 100 parts by mass of the rubber component enables optimal vulcanization of the rubber composition, whereas compounding of no greater than 5.0 parts by mass limits the influence of the vulcanization accelerator on the reinforcement layer 20 in which the resin material is used and the tire frame 10 that is located inward of the reinforcement layer 20 in the tire radial direction, and thereby ensures sufficient durability of the reinforcement layer 20 and the tire frame 10.

The reinforcement layer 20 includes the reinforcement member 21 and the coating layer 22 that coats the reinforcement member 21, and preferably includes at least a reinforcement member 21 that is wound in the tire circumferential direction as in the tire illustrated in FIG. 1. As a result of the reinforcement member 21 being arranged such as to wind in the tire circumferential direction, puncture resistance, cut resistance, and circumferential direction rigidity of the tire can be improved and, as a result of this improved circumferential direction rigidity, creeping of the tire frame can be inhibited.

Although the reinforcement layer 20 may be used in combination with another reinforcement member such as a two-layer intersecting belt member, the reinforcement layer 20 is preferably used alone from a viewpoint of weight reduction.

The reinforcement layer 20 can for example be produced by coating the reinforcement member 21 with the resin composition and then arranging the resin composition-coated reinforcement member 21 outward of the tire frame 10 in the tire radial direction.

Examples of the reinforcement member 21 used in the reinforcement layer 20 include steel cord, organic fiber cord, and carbon fiber cord, among which, steel cord is preferable in terms of having an excellent effect on improving circumferential direction rigidity of the tire.

A resin composition containing from 50 mass% to 100 mass% of a resin material is used in the coating layer 22 of the reinforcement layer 20. In the resin composition used in the reinforcement layer, a resin material content of at least 50 mass% enhances the effect of tire weight reduction and makes the tire easier to recycle. In a situation in which a reinforcement member is coated with a rubber, it is difficult to separate the reinforcement member and the rubber simply by heating. However, in the case of the coating layer 22 in which the resin composition containing from 50 mass% to 100 mass% of the resin material is used, the reinforcement member 21 and the coating layer 22 can be separated simply by heating, which is beneficial in terms of tire recycling. From a viewpoint of ease of recycling, the resin composition used in the coating layer 22 of the reinforcement layer 20 preferably contains from 60 mass% to 100 mass% of the resin material, and more preferably contains from 70 mass% to 100 mass% of the resin material. Moreover, in the case of the coating layer 22 in which the resin composition containing from 50 mass% to 100 mass% of the resin material is used, a harder reinforcement member can be used, corner power can be obtained, and handling performance can be enhanced.

It should be noted that the reinforcement layer 20 in the presently disclosed tire is formed by coating the reinforcement member 21 with the resin composition containing from 50 mass% to 100 mass% of the resin material and is, therefore, different from a normal tire carcass that is formed by coating a reinforcement member with a rubber.

Herein, the resin material does not include a rubber and may for example be a thermoplastic resin, a thermoplastic elastomer, or a thermosetting resin.

The resin composition used in the reinforcement layer preferably contains at least one of a thermoplastic resin and a thermoplastic elastomer, and more preferably contains a thermoplastic elastomer. The reinforcement layer can be recycled even more easily when the reinforcement layer is formed using a thermoplastic resin and/or a thermoplastic elastomer. Moreover, durability of the reinforcement layer against strain input is improved when the reinforcement layer is formed using a thermoplastic elastomer.

Herein, thermoplastic resins and thermoplastic elastomers are polymeric compounds forming materials that soften and flow in accompaniment to an increase in temperature, and that adopt a relatively hard and strong state when cooled. In the present specification, thermoplastic resins and thermoplastic elastomers are distinguished between by using the term "thermoplastic elastomer" to refer to a polymeric compound forming a material that softens and flows in accompaniment to an increase in temperature, that adopts a relatively hard and strong state when cooled, and that has rubbery elasticity, and the term "thermoplastic resin" is used to refer to a polymeric compound forming a material that softens and flows in accompaniment to an increase in temperature, that adopts a relatively hard and strong state when cooled, and that does not have rubbery elasticity.

Examples of thermoplastic resins that can be used in the resin composition for the coating layer 22 of the reinforcement layer 20 include a polyolefin-based thermoplastic resin, a polystyrene-based thermoplastic resin, a polyamide-based thermoplastic resin, a polyester-based thermoplastic resin, and a polyurethane-based thermoplastic resin. Among these thermoplastic resins, a polyamide-based thermoplastic resin, a polyester-based thermoplastic resin, and a polyurethane-based thermoplastic resin are preferable from a viewpoint of durability against strain input.

Examples of thermoplastic elastomers that can be used in the resin composition for the coating layer 22 of the reinforcement layer 20 include a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), and a dynamic crosslink thermoplastic elastomer (TPV). Among these thermoplastic elastomers, a polyamide-based thermoplastic elastomer (TPA), a polyurethane-based thermoplastic elastomer (TPU), and a polyester-based thermoplastic elastomer (TPC) are preferable from a viewpoint of durability against strain input.

One of such thermoplastic resins or thermoplastic elastomers may be used individually, or a combination of two or more of such thermoplastic resins and/or thermoplastic elastomers may be used as a blend. Although the melting point (or the softening point) of the actual resin material is normally approximately 100°C to 350°C, and preferably approximately 100°C to 250°C, from a viewpoint of achieving a balance of both tire productivity and durability, the melting point (or the softening point) is preferably approximately 120°C to 250°C, and more preferably 120°C to 200°C. Through use of a material having a melting point (or a softening point) in the temperature range described above, the effects obtained due to the tread rubber prescribed in the present disclosure can be enhanced while ensuring suitable productivity.

The polyamide-based thermoplastic elastomer (TPA) is a thermoplastic resin material formed by a copolymer that is an elastic polymeric compound having a polymer composing hard segments that are crystalline and have a high melting point and a polymer composing soft segments that are amorphous and have a low glass transition temperature, wherein amide bonds (-CONH-) are present in the main chain of the polymer composing the hard segments.

The polyamide-based thermoplastic elastomer may for example be a material in which the hard segments that are crystalline and have a high melting point are composed by at least a polyamide, and the soft segments that are amorphous and have a low glass transition temperature are composed by another polymer (for example, a polyester or polyether). Besides the hard segments and the soft segments, a chain extender such as a dicarboxylic acid may be used in the polyamide-based thermoplastic elastomer.

The polyamide that forms the hard segments of the polyamide-based thermoplastic elastomer (TPA) may for example be a polycondensate of an ω-aminocarboxylic acid or a lactam, or a copolycondensate of a diamine and a dicarboxylic acid.

Examples of the ω-aminocarboxylic acid include 6-aminocaproic acid, 7-aminoheptanoic acid, 8-aminooctanoic acid, 10-aminocapric acid, 11-aminoundecanoic acid, and 12-aminododecanoic acid.

Examples of the lactam include lauryl lactam, ε-caprolactam, ω-enantholactam, and 2-pyrrolidone.

Examples of the diamine include ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and m-xylylenediamine.

Examples of the dicarboxylic acid include oxalic acid, succinic acid, glutaric acid, adipic acid, pimelic acid, suberic acid, azelaic acid, sebacic acid, and dodecanedioic acid.

The polymer that forms the soft segments of the polyamide-based thermoplastic elastomer (TPA) may for example be a polyester or a polyether such as polyethylene glycol, polypropylene glycol, polytetramethylene ether glycol, or an ABA triblock polyether.

Preferable examples of combinations of the hard segments and the soft segments of the polyamide-based thermoplastic elastomer (TPA) include a combination of a ring-opening polycondensate of lauryl lactam and polyethylene glycol, a combination of a ring-opening polycondensate of lauryl lactam and polypropylene glycol, a combination of a ring-opening polycondensate of lauryl lactam and polytetramethylene ether glycol, and a combination of a ring-opening polycondensate of lauryl lactam and an ABA triblock polyether. The combination of a ring-opening polycondensate of lauryl lactam and an ABA triblock polyether is particularly preferable.

The polyamide-based thermoplastic elastomer can be synthesized by copolymerizing the polymer that forms the hard segments and the polymer that forms the soft segments by a commonly known method. The polyamide-based thermoplastic elastomer may be a commercially available product. Examples include products from the "UBESTA XPA" series produced by Ube Industries, Ltd. (for example, XPA9063X1, XPA9055X1, XPA9048X2, XPA9048X1, XPA9040X1, XPA9040X2, and XPA9044) and products from the "VESTAMID" series produced by Daicel-Evonik Ltd. (for example, E40-S3, E47-S1, E47-S3, E55-S1, E55-S3, EX9200, and E50-R2).

The polyurethane-based thermoplastic elastomer (TPU) may for example be a material in which at least polyurethane composes hard segments that form pseudo-crosslinks by physical aggregation and another polymer composes soft segments that are amorphous and have a low glass transition temperature.

The soft segments of the polyurethane-based thermoplastic elastomer (TPU) may for example be formed using a high molecular weight diol compound such as polyethylene glycol, polypropylene glycol, polytetramethylene ether glycol, poly(butylene adipate) diol, poly-ε-caprolactone diol, or poly(hexamethylenecarbonate) diol; and a diisocyanate compound such as 1,2-ethylene diisocyanate, 1,3-propylene diisocyanate, 1,4-butane diisocyanate, 1,6-hexamethylene diisocyanate, 1,4-cyclohexane diisocyanate, 4,4-cyclohexane diisocyanate, 4,4'-diphenylmethane diisocyanate, or tolylene diisocyanate.

The hard segments of the polyurethane-based thermoplastic elastomer (TPU) may for example be formed using a low molecular weight diol compound such as ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, 1,10-decanediol, cyclopentane-1,2-diol, cyclohexane-1,2-diol, cyclohexane-1,3-diol, cyclohexane-1,4-diol, cyclohexane-1,4-dimethanol, hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenyl sulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, or 2,6-dihydroxynaphthalene; and a diisocyanate compound such as 1,2-ethylene diisocyanate, 1,3-propylene diisocyanate, 1,4-butane diisocyanate, 1,6-hexamethylene diisocyanate, 1,4-cyclohexane diisocyanate, 4,4-cyclohexane diisocyanate, 4,4'-diphenylmethane diisocyanate, or tolylene diisocyanate.

The polyurethane-based thermoplastic elastomer can be synthesized by copolymerizing the polymer that forms the hard segments and the polymer that forms the soft segments by a commonly known method. The polyurethane-based thermoplastic elastomer may be a commercially available product. Examples include products from the "Elastollan" series produced by BASF (for example, ET680, ET880, ET690, and ET890), products from the "KURAMIRON U" series produced by Kuraray Co., Ltd. (for example, products in the 2000s, 3000s, 8000s, and 9000s), and products from the "Miractran" series produced by Nippon Miractran Co., Ltd. (for example, XN-2001, XN-2004, P390RSUP, P480RSUI, P26MRNAT, E490, E590, and P890).

The polyester-based thermoplastic elastomer (TPC) is a thermoplastic resin material formed by a copolymer that is an elastic polymeric compound having a polymer composing hard segments that are crystalline and have a high melting point and a polymer composing soft segments that are amorphous and have a low glass transition temperature, wherein a polyester resin is included as the polymer composing the hard segments.

An aromatic polyester can be used as a crystalline polyester that forms the hard segments of the polyester-based thermoplastic elastomer (TPC). The aromatic polyester can for example be formed from an aliphatic diol and an aromatic dicarboxylic acid or ester-forming derivative thereof. The aromatic polyester that forms the hard segments may for example be polyethylene terephthalate, polybutylene terephthalate, polystyrene terephthalate, polyethylene naphthalate, or polybutylene naphthalate, and is preferably polybutylene terephthalate.

One preferable example of the aromatic polyester that forms the hard segments is polybutylene terephthalate derived from 1,4-butanediol and either or both of terephthalic acid and dimethyl terephthalate. Furthermore, the aromatic polyester may be a polyester that is derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative of any of these dicarboxylic acids; and a diol component such as ethylene glycol, trimethylene glycol, pentamethylene glycol, hexamethylene glycol, neopentyl glycol, decamethylene glycol, 1,4-cyclohexanedimethanol, tricyclodecane dimethylol, xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl, or may be a copolymer polyester in which two or more types of dicarboxylic acid components and diol components such as described above are used in combination.

The polymer that forms the soft segments of the polyester-based thermoplastic elastomer (TPC) may for example be a polymer selected from aliphatic polyethers and aliphatic polyesters.

Examples of aliphatic polyethers that can be used include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide addition polymer of poly(propylene oxide) glycol, and a copolymer of ethylene oxide and tetrahydrofuran.

Examples of aliphatic polyesters that can be used include poly(ε-caprolactone), polyenantholactone, polycaprylolactone, polybutylene adipate, and polyethylene adipate.

Among the aliphatic polyethers and aliphatic polyesters listed above, poly(tetramethylene oxide) glycol, an ethylene oxide addition polymer of poly(propylene oxide) glycol, poly(ε-caprolactone), polybutylene adipate, polyethylene adipate, and the like are preferable from a viewpoint of elasticity characteristics of the resultant copolymer.

The polyester-based thermoplastic elastomer can be synthesized by copolymerizing the polymer that forms the hard segments and the polymer that forms the soft segments by a commonly known method. The polyester-based thermoplastic elastomer may be a commercially available product. Examples include products from the "Hytrel" series produced by Du Pont-Toray Co., Ltd. (for example, 3046, 5557, 5577, 6347, 4047, 4767, and 4777) and products from the "Pelprene" series produced by Toyobo Co., Ltd. (for example, P30B, P40B, P40H, P55B, P70B, P150B, P280B, P450B, P150M, S1001, S2001, S5001, S6001, and S9001).

Examples of thermosetting resins that can be used include phenolic resins, epoxy resins, melamine resins, and urea resins.

In addition to the resin material, the resin composition for the coating layer 22 of the reinforcement layer 20 may contain a rubber and additives such as various fillers (for example, silica, calcium carbonate, and clay), antioxidants, oils, plasticizers, colorants, anti-weathering agents, and reinforcing materials as desired.

Adhesiveness of the coating layer 22 and the reinforcement member 21 of the reinforcement layer 20 may be improved by providing an adhesive layer between the coating layer 22 and the reinforcement member 21 or by forming the coating layer 22 as a laminate of a plurality of different materials. A thermoplastic resin, a thermoplastic elastomer, a solvent-based adhesive, an aqueous adhesive, a thermosetting resin, or the like can be used in the adhesive layer.

The tire frame 10 may be a normal tire case that is formed mainly from a rubber, or may be formed from a resin composition containing from 50 mass% to 100 mass% of a resin material.

The tire case formed mainly from a rubber is for example a tire case that includes a pair of bead portions, a pair of side portions that continue outward from the bead portions in the tire radial direction, a crown portion that continues inward from the side portions in the tire width direction and that connects the side portions to one another at the respective outer edges thereof in the tire radial direction, and a carcass that extends in a toroidal shape between bead cores that are each embedded in a corresponding one of the bead portions, wherein the tire case is formed mainly from a rubber with the exception of reinforcement cord (for example, organic fiber cord or steel cord) in the bead cores or the carcass.

On the other hand, in a situation in which the tire frame 10 is formed from a resin composition containing from 50 mass% to 100 mass% of a resin material, the resin composition used in the tire frame 10 may be the same or different to the previously described resin composition that is used in the coating layer 22 of the reinforcement layer 20. However, it is preferable that these resin compositions are the same when adhesiveness and differences in physical properties of the coating layer 22 and the tire frame 10 are taken into account.

In a situation in which the tire frame 10 is formed from a resin composition containing from 50 mass% to 100 mass% of a resin material, the thickness of the tire frame 10 at a tire maximum width portion when unloaded is normally from 0.5 mm to 2.5 mm, and preferably from 1 mm to 2 mm. Therefore, the tire frame 10 is different from a resin-made inner liner that may be provided at a tire inner surface of a tire case formed mainly from a rubber since this inner liner normally has a thickness of no greater than 100 µm.

It should be noted that even in a situation in which the tire frame 10 is formed from a resin composition containing from 50 mass% to 100 mass% of a resin material, the presently disclosed tire may include a separately provided carcass formed by cord, such as organic fiber cord or steel cord, coated by a rubber in the same way as in a normal tire. The carcass may be located outward or inward of the reinforcement layer 20 in the tire radial direction. It is more preferable for the carcass to be located outward of the reinforcement layer 20 since this means that the reinforcement layer 20 formed by coating the reinforcement member 21 with the resin composition does not become sandwiched between rubber members, and, as a result, the number of interfaces between resin and rubber is reduced such that problems caused by poor adhesion are less likely to occur and the amount of unintended migration to the resin material of chemicals or the like that are compounded in the rubber can be reduced. Moreover, from a viewpoint of heat buildup, it is preferable that the carcass is located outward of the reinforcement member 21 such that heat transfer only occurs in one direction relative to the reinforcement member 21.

In the resin composition optionally used in the tire frame 10, a resin material content of at least 50 mass% makes it easier to recycle the tire. From a viewpoint of ease of recycling, it is preferable that the resin composition optionally used in the tire frame 10 contains from 90 mass% to 100 mass% of the resin material.

The resin composition optionally used in the tire frame 10 preferably contains at least one of a thermoplastic resin and a thermoplastic elastomer. Formation of the tire frame 10 using a thermoplastic resin and/or thermoplastic elastomer makes recycling even easier, enables simplification of structure compared to conventional rubber-made tires, and enables further reduction in weight of the tire.

The same thermoplastic resins and thermoplastic elastomers as listed for the previously described resin composition used in the coating layer 22 of the reinforcement layer 20 can also be used for the resin composition optionally used in the tire frame 10. Moreover, in the same way as for the resin composition used in the coating layer 22 of the reinforcement layer 20, it is preferable to use a polyamide-based thermoplastic resin, a polyester-based thermoplastic resin, a polyurethane-based thermoplastic resin, a polyamide-based thermoplastic elastomer (TPA), a polyurethane-based thermoplastic elastomer (TPU), or a polyester-based thermoplastic elastomer (TPC) for the resin composition optionally used in the tire frame 10. Furthermore, additives other than the resin material that can be added are also the same as for the resin composition used in the coating layer 22 of the reinforcement layer 20.

The tire frame 10 in which this resin composition is used can be produced in accordance with the second embodiment in JP 2012-046030 A (PTL 3). For example, the tire frame can be produced by preparing halves of the tire frame by injection molding, placing the halves in opposition to one another, and joining the halves together by joining in which pressing is preferably carried out at a temperature that is at least as high as the melting point of the resin material in the resin composition that is used.

### EXAMPLES

The following describes the presently disclosed tire in more detail through examples. However, the presently disclosed tire is not in any way limited by the following examples.

### (Examples 1-19 and Comparative Examples 1-4)

A tire frame (tire case) was produced in accordance with the second embodiment in JP 2012-046030 A (PTL 3) by preparing halves of the tire frame by injection molding using a polyamide-based thermoplastic elastomer as a resin material, placing the halves in opposition to one another, and joining the halves by pressing at a temperature that was at least as high as the melting point of the polyamide-based thermoplastic elastomer that was used.

Next, a reinforcement layer was provided outward of the tire frame in a tire radial direction by spirally winding, in a tire circumferential direction, steel cord that had been coated with a thermoplastic elastomer.

Tread rubber formed from a rubber composition of a formulation shown in Tables 1-3 was then provided outward of the reinforcement layer in the tire radial direction, and vulcanization was subsequently carried out. Through this process, a tire (pneumatic tire) was produced.

The produced tire frame had a thickness of 2 mm at a tire maximum width portion when unloaded.

The tire frame and the coating layer of the steel cord were each formed from a thermoplastic elastomer and the percentage of resin material therein was 100 mass%. The thermoplastic elastomer used in the tire frame was the product "UBESTA XPA9055X1" (polyamide-based thermoplastic elastomer) produced by Ube Industries, Ltd. Moreover, the thermoplastic elastomer used in the coating layer of the steel cord was the product "UBESTA XPA9055X1" (polyamide-based thermoplastic elastomer) produced by Ube Industries, Ltd. An adhesive layer was provided between the steel cord and the coating layer using the product "ADMER QE060" (acid-modified polypropylene resin) produced by Mitsui Chemicals Co., Ltd.

The following methods were used in order to measure the organic acid content in the rubber composition used in the tread rubber, the loss tangent (tan δ) and the storage modulus (E') of the tread rubber, and the tensile strength (Tb) of the tread rubber.

### (1) Measurement of organic acid content in rubber composition used in tread rubber

The amount of organic acid (organic acid content) in the rubber composition was obtained in accordance with JIS K6237:2012.

### (2) Measurement of loss tangent (tan δ) and storage modulus (E')

A rubber sheet of 50 mm in length, 5 mm in width, and 2 mm in thickness was cut from the tread rubber of the produced tire. The storage modulus (E'_{0°C}) during 1% strain at 0°C, the loss tangent (tan δ_{0°C}) during 1% strain at 0°C, the loss tangent (tan δ_{30°C}) during 1% strain at 30°C, and the loss tangent (tan δ_{60°C}) during 1% strain at 60°C were measured with respect to the rubber sheet under conditions of an initial load of 160 mg and a frequency of 52 Hz using a spectrometer produced by Ueshima Seisakusho Co., Ltd. Moreover, "tan δ_{30°C} - tan δ_{60°C}", "tan δ_{0°C} - tan δ_{30°C}", and "tan δ_{0°C} - tan δ_{60°C}" were calculated. The results are shown in Tables 1-3.

### (3) Tensile strength (Tb)

A rubber sheet was cut from the tread rubber of the produced tire using a DIN 53504, S3A-type cutter and the tensile strength (Tb) was measured in accordance with JIS K6251:2010.

The produced tire was evaluated by the following methods in order to evaluate fuel efficiency, wet performance, handling performance on a dry road surface, and ride comfort.

### (4) Fuel efficiency

Sample tires were fitted onto a test vehicle and fuel efficiency (km/L) was measured in an actual vehicle test conducted in an environment of either from 25°C to 30°C (normal temperature) or from 5°C to 10°C (low temperature). The results were expressed as index values relative to the fuel efficiency at low temperature of the tire in Example 1, which was set as 100, and were evaluated according to the following index. In the following index, a grade of C or better is considered to indicate that the effects of the presently disclosed tire are displayed.
Index value of at least 130: AA
Index value of at least 120 and less than 130: A
Index value of at least 110 and less than 120: B
Index value of at least 100 and less than 110: C
Index value of less than 100: D
The difference between the index value for normal temperature fuel efficiency and the index value for low temperature fuel efficiency was calculated and was evaluated according to the following index. In the following index, a grade of A or B is considered to indicate that the effects of the presently disclosed tire are displayed.

Difference between index value for normal temperature fuel efficiency and index value for low temperature fuel efficiency of no greater than 5: A

Difference between index value for normal temperature fuel efficiency and index value for low temperature fuel efficiency of greater than 5 and no greater than 10: B

Difference between index value for normal temperature fuel efficiency and index value for low temperature fuel efficiency of greater than 10 and no greater than 15: C

Difference between index value for normal temperature fuel efficiency and index value for low temperature fuel efficiency of greater than 15: D

### (5) Wet performance

Sample tires were fitted onto a test vehicle and an actual vehicle test on a wet road surface was conducted in which the driver gave the steering stability a subjective evaluation score. The results were expressed as index values relative to the subjective evaluation score for the tire in Example 1, which was set as 100. A larger index value indicates better wet performance. An index value of at least 100 is considered to indicate that the effects of the presently disclosed tire are displayed.

### (6) Handling performance on dry road surface

Sample tires were fitted onto a test vehicle and an actual vehicle test on a dry road surface was conducted in which handling performance was subjectively evaluated and categorized as from A to C by the driver. The evaluation standard was as shown below. In the following index, a grade of B or better meets the standard.
Good handling performance: A
Normal handling performance: B
Poor handling performance: C

### (7) Ride comfort

Sample tires were fitted onto a test vehicle and an actual vehicle test on a dry road surface was conducted in which ride comfort was subjectively evaluated and categorized as from A to C by the driver. The evaluation standard was as shown below. In the following index, a grade of B or better meets the required standard.
Good ride comfort: A
Normal ride comfort: B
Poor ride comfort: C

**Table 1**

| | | | Example 1 | Example 2 | Example 3 | Example 4 | Example 5 | Comparative Example 1 | Example 6 | Example 7 |
|---|---|---|---|---|---|---|---|---|---|---|
| | Natural rubber *1 | | 40 | 60 | 80 | 100 | 40 | 40 | 100 | 100 |
| | Polvbutadiene rubber *2 | | 60 | 40 | 20 | - | 60 | - | - | - |
| | Styrene-butadiene copolymer rubber *3 | | - | - | - | - | - | 60 | - | - |
| | Carbon black *4 | | 5 | 5 | 5 | 5 | 5 | 5 | 5 | 5 |
| | Silica *5 | | 50 | 50 | 50 | 50 | 50 | 50 | 50 | 50 |
| | Silane coupling agent *6 | | 4 | 4 | 4 | 4 | 4 | 4 | 4 | 4 |
| | C₅ resin *7 | | - | - | - | - | - | - | 15 | - |
| | C₉ resin *8 | | 2 | 15 | 15 | 15 | 15 | 15 | - | - |
| | C₅-C₉ resin *9 | | - | - | - | - | - | - | - | 15 |
| | Dicyclopentadiene resin *10 | | - | - | - | - | - | - | - | - |
| | Rosin resin *11 | Parts by mass | - | - | - | - | - | - | - | - |
| | Alkvl phenolic resin *12 | | - | - | - | - | - | - | - | - |
| Tread rubber formulation | Terpene phenolic resin *13 | | - | - | - | - | - | - | - | - |
| | Petroleum-based oil *14 | | 2 | 2 | 2 | 2 | 2 | 2 | 2 | 2 |
| | Natural product-based oil *15 | | - | - | - | - | - | - | - | - |
| | Antioidant *16 | | 1 | 1 | 1 | 1 | 1 | 1 | 1 | 1 |
| | Stearic acid | | 1 | 1 | 1 | 1 | 1 | 1 | 1 | 1 |
| | Zinc oxide | | 2.5 | 2.5 | 2.5 | 2.5 | 2.5 | 2.5 | 2.5 | 2.5 |
| | Vulcanization accelerator A *17 | | 0.8 | 0.8 | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 | 1.1 | 1.1 |
| | Vulcanization accelerator C *19 | | 1 | 1 | 1 | 1 | 1 | 1 | 1 | 1 |
| | Vulcanization accelerator D *20 | | - | - | - | - | - | - | - | - |
| | Sulfur | | 1.9 | 1.9 | 1.9 | 1.9 | 1.9 | 1.9 | 1.9 | 1.9 |
| | Percentage of isoprene-based rubber in rubber component | Mass% | 40 | 60 | 80 | 100 | 40 | 40 | 100 | 100 |
| | Percentage of silica in filler | | 90.9 | 90.9 | 90.9 | 90.9 | 90.9 | 90.9 | 90.9 | 90.9 |
| | Organic acid content | Mass% | 1.5 | 1.7 | 2.0 | 2.3 | 1.5 | 1.5 | 2.3 | 2.3 |
| | Total amount of vulcanization accelerators | Parts by mass | 2.9 | 2.9 | 2.9 | 2.9 | 2.9 | 2.9 | 2.9 | 2.9 |
| Tread rubber physical properties | tan δ_{0°C} | - | 0.310 | 0.325 | 0.339 | 0.360 | 0.424 | 0.680 | 0.357 | 0.364 |
| | tan δ_{30°C} | | 0.170 | 0.174 | 0.178 | 0.190 | 0.205 | 0.169 | 0.171 | 0.175 |
| | tan δ_{60°C} | | 0.120 | 0.129 | 0.133 | 0.149 | 0.163 | 0.111 | 0.125 | 0.122 |
| | tan δ_{0°C} - tan δ_{30°C} | | 0.137 | 0.152 | 0.161 | 0.169 | 0.219 | 0.511 | 0.186 | 0.189 |
| | tan δ_{30°C} - tan δ_{60°C} | | 0.050 | 0.044 | 0.045 | 0.042 | 0.042 | 0.078 | 0.046 | 0.052 |
| | E'_{0°C} | MPa | 26.0 | 10.0 | 10.5 | 11.4 | 10.3 | 9.5 | 8.2 | 8.4 |
| | Tb | | 30.7 | 26.8 | 26.6 | 25.4 | 27.1 | 24.3 | 27.4 | 27.0 |
| Tire frame material | | | Resin | Resin | Resin | Resin | Resin | Resin | Resin | Resin |
| Material of coating layer of reinforcement laver | | | Resin | Resin | Resin | Resin | Resin | Resin | Resin | Resin |
| Tire evaluation results | Normal temperature fuel efficiency | - | B | A | A | AA | B | B | A | A |
| | Low temperature fuel efficiency | | C | A | A | A | B | C | A | A |
| | Normal temperature fuel efficiency - low temperature fuel efficiency | | B | A | A | A | A | C | A | A |
| | Wet performance | Index value | 100 | 130 | 136 | 143 | 114 | 123 | 157 | 157 |
| | Handling performance on dry road surface | - | A | A | A | A | A | A | A | A |
| | Ride comfort | | B | A | A | A | A | A | A | A |

**Table 2**

| | | | Example 8 | Example 9 | Example 10 | Example 11 | Example 12 | Example 13 | Comparative Example 2 | Comparative Example 3 |
|---|---|---|---|---|---|---|---|---|---|---|
| | Natural rubber *1 | | 100 | 100 | 100 | 100 | 100 | 100 | 100 | 100 |
| | Polvbutadiene rubber *2 | | - | - | - | - | - | - | - | - |
| | Styrene-butadiene copolymer rubber *3 | | - | - | - | - | - | - | - | - |
| | Carbon black *4 | | 5 | 5 | 5 | 5 | 5 | 5 | 5 | 5 |
| | Silica *5 | | 50 | 50 | 50 | 50 | 50 | 50 | 50 | 50 |
| | Silane coupling agent *6 | | 4 | 4 | 4 | 4 | 4 | 4 | 4 | 4 |
| | C₅ resin *7 | | - | - | - | - | - | - | - | - |
| | C₉ resin *8 | | - | - | - | - | 8 | 30 | 2 | 45 |
| | C₅-C₉ resin *9 | | - | - | - | - | - | - | - | - |
| | Dicyclopentadiene resin *10 | | 15 | - | - | - | - | - | - | - |
| | Rosin resin *11 | Parts by mass | · | · | · | 15 | | | - | - |
| | Alkyl phenolic resin *12 | | - | - | 15 | - | - | - | - | - |
| Tread rubber formulation | Terpene phenolic resin *13 | | - | - | - | 15 | - | - | - | - |
| | Petroleum-based oil *14 | | 2 | 2 | 2 | 2 | 2 | 2 | 2 | 2 |
| | Natural product-based oil *15 | | - | - | - | - | - | - | - | - |
| | Antioxidant *16 | | 1 | 1 | 1 | 1 | 1 | 1 | 1 | 1 |
| | Stearic acid | | 1 | 1 | 1 | 1 | 1 | 1 | 1 | 1 |
| | Zinc oxide | | 2.5 | 2.5 | 2.5 | 2.5 | 2.5 | 2.5 | 2.5 | 2.5 |
| | Vulcanization accelerator A*17 | | 0.8 | 0.8 | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 | 1.1 | 1.1 |
| | Vulcanization accelerator C *19 | | 1 | 1 | 1 | 1 | 1 | 1 | 1 | 1 |
| | Vulcanization accelerator D *20 | | - | - | - | - | - | - | - | - |
| | Sulfur | | 1.9 | 1.9 | 1.9 | 1.9 | 1.9 | 1.9 | 1.9 | 1.9 |
| | Percentage of isoprene-based rubber in rubber component | Mass% | 100 | 100 | 100 | 100 | 100 | 100 | 100 | 100 |
| | Percentage of silica in filler | | 90.9 | 90.9 | 90.9 | 90.9 | 90.9 | 90.9 | 90.9 | 90.9 |
| | Organic acid content | Mass% | 2.3 | 2.3 | 2.3 | 2.3 | 2.3 | 2.3 | 2.3 | 2.3 |
| | Total amount of vulcanization accelerators | Parts by mass | 2.9 | 2.9 | 2.9 | 2.9 | 2.9 | 2.9 | 2.9 | 2.9 |
| Tread physical properties | tan δ_{0°C} | - | 0.382 | 0.283 | 0.319 | 0.352 | 0.329 | 0.425 | 0.327 | 0.548 |
| | tan δ_{30°C} | | 0.193 | 0.198 | 0.214 | 0.204 | 0.178 | 0.218 | 0.232 | 0.227 |
| | tan δ_{60°C} | | 0.139 | 0.195 | 0.213 | 0.183 | 0.138 | 0.172 | 0.148 | 0.208 |
| | tan δ_{0°C} - tan δ_{30°C} | | 0.189 | 0.085 | 0.105 | 0.148 | 0.152 | 0.206 | 0.095 | 0.321 |
| | tan δ_{30°C} - tan δ_{60°C} | | 0.054 | 0.003 | 0.001 | 0.021 | 0.040 | 0.046 | 0.083 | 0.019 |
| | E'_{0°C} | MPa | 8.7 | 19.0 | 14.8 | 12.1 | 11.1 | 12.2 | 25.2 | 15.5 |
| | Tb | | 27.3 | 25.5 | 26.9 | 28.1 | 26.6 | 22.8 | 25.0 | 25.0 |
| Tire frame material | | | Resin | Resin | Resin | Resin | Resin | Resin | Resin | Resin |
| Material of coating layer of reinforcement la-,er | | | Resin | Resin | Resin | Resin | Resin | Resin | Resin | Resin |
| Tire evaluation results | Normal temperature fuel efficiency | | A | B | A | B | A | B | B | C |
| | Low temperature fuel efficiency | | A | B | A | B | A | B | D | D |
| | Normal temperature fuel efficiency - low temperature fuel efficiency | | A | A | A | A | A | A | D | A |
| | Wet performance | Index value | 150 | 140 | 137 | 164 | 141 | 164 | 107 | 179 |
| | Handling performance on dry road surface | - | A | A | A | A | A | A | A | A |
| | Ride comfort | | A | B | B | A | A | A | B | B |

**Table 3**

| | | | Example 14 | Example 15 | Example 16 | Example 17 | Comparative Example 4 | Example 18 | Example 19 |
|---|---|---|---|---|---|---|---|---|---|
| | Natural rubber *1 | | 100 | 100 | 100 | 100 | 40 | 40 | 100 |
| | Polybutadiene rubber *2 | | - | - | - | - | 60 | 60 | - |
| | Styrene-butadiene copolymer rubber *3 | | - | - | - | - | - | - | - |
| | Carbon black *4 | | 5 | 15 | 5 | 5 | 5 | 5 | 5 |
| | Silica *5 | | 50 | 60 | 50 | 50 | 50 | 50 | 50 |
| | Silane coupling agent *6 | | 4 | 4.8 | 4 | 4 | 4 | 4 | 4 |
| | C₅ resin *7 | | - | - | - | - | - | - | - |
| | C₉ resin *8 | | 15 | 8 | 15 | 15 | 2 | 2 | 45 |
| | C₅-C₉ resin *9 | | - | - | - | - | - | - | - |
| | Dicyclopentadiene resin *10 | | - | - | - | - | - | - | - |
| | Rosin resin *11 | Parts by mass | - | - | - | - | - | - | - |
| | Alkvl phenolic resin *12 | | - | - | - | - | - | - | - |
| Tread rubber formulation | Terpene phenolic resin *13 | | - | - | - | - | - | - | - |
| | Petroleum-based oil *14 | | - | - | 2 | 2 | 2 | 4 | 2 |
| | Natural product-based oil *15 | | 2 | 17 | - | - | - | - | - |
| | Antioxidant *16 | | 1 | 1 | 1 | 1 | 1 | 1 | 1 |
| | Stearic acid | | 1 | 1 | 1 | 1 | 1 | 1 | 1 |
| | Zinc oxide | | 2.5 | 2.5 | 2.5 | 2.5 | 2.5 | 2.5 | 2.5 |
| | Vulcanization accelerator A *17 | | 0.8 | - | - | 0.8 | 0.8 | 0.8 | 0.8 |
| | Vulcanization accelerator B *18 | | 1.1 | - | - | 1.1 | 1.1 | 1.1 | 1.1 |
| | Vulcanization accelerator C *19 | | 1 | - | - | 1 | 1 | 1 | 1 |
| | Vulcanization accelerator D *20 | | - | 2.1 | 2.1 | - | - | - | - |
| | Sulfur | | 1.9 | 1.9 | 1.9 | 1.9 | 1.9 | 1.9 | 1.9 |
| | Percentage of isoprene-based rubber in rubber component | Mass% | 100 | 100 | 100 | 100 | 40 | 40 | 100 |
| | Percentage of silica in filler | | 90.9 | 80.0 | 90.9 | 90.9 | 90.9 | 90.9 | 90.9 |
| | Organic acid content | Mass% | 2.3 | 2.3 | 2.3 | 2.3 | 1.5 | 1.5 | 2.3 |
| | Total amount of vulcanization accelerators | Parts by mass | 2.9 | 2.1 | 2.1 | 2.9 | 2.9 | 2.9 | 2.9 |
| Tread rubber physical properties | tan δ_{0°C} | - | 0.413 | 0.346 | 0.311 | 0.356 | 0.330 | 0.330 | 0.500 |
| | tan δ_{30°C} | | 0.213 | 0.212 | 0.183 | 0.192 | 0.180 | 0.180 | 0.217 |
| | tan δ_{60°C} | | 0.169 | 0.163 | 0.140 | 0.147 | 0.130 | 0.130 | 0.203 |
| | tan δ_{0°C} - tan δ_{30°C} | | 0.200 | 0.134 | 0.128 | 0.164 | 0.150 | 0.150 | 0.283 |
| | tan δ_{30°C} - tan δ_{60°C} | | 0.044 | 0.049 | 0.043 | 0.045 | 0.050 | 0.050 | 0.014 |
| | E'_{0°C} | MPa | 13.2 | 10.7 | 9.8 | 11.3 | 35.0 | 30.0 | 15.5 |
| | Tb | | 25.1 | 22.2 | 24.2 | 24.9 | 28.6 | 28.6 | 25.0 |
| Tire frame material | | | Resin | Resin | Resin | Resin | Resin | Resin | Resin |
| Material of coating layer of reinforcement layer | | | Resin | Resin | Resin | Resin | Resin | Resin | Resin |
| Tire evaluation results | Normal temperature fuel efficiency | - | B | B | A | B | B | B | C |
| | Low temperature fuel efficiency | | B | B | A | B | C | C | C |
| | Normal temperature fuel efficiency - low temperature fuel efficiency | | A | A | A | A | B | B | A |
| | Wet performance | Index value | 133 | 137 | 136 | 141 | 97 | 98 | 179 |
| | Handling performance on dry road surface | - | A | A | A | A | A | A | A |
| | Ride comfort | | B | A | A | A | C | C | B |

| | | | | | | | | | |
|---|---|---|---|---|---|---|---|---|---|
| *1 Natural rubber: "SIR20" produced in Indonesia *2 Polybutadiene rubber: Produced by JSR Corporation, product name "BR01" *3 Styrene-butadiene copolymer rubber: Produced by JSR Corporation, product name "#1500" *4 Carbon black: N234 (ISAF), produced by Asahi Carbon Co., Ltd., product name "#78" *5 Silica: Produced by Tosoh Silica Corporation, product name "Nipsil AQ", BET specific surface area = 205 m²/g *6 Silane coupling agent: Bis(3-triethoxysilylpropyl)disulfide, average sulfur chain length = 2.35, produced by Evonik Industries, product name "Si 75®" (Si 75 is a registered trademark in Japan, other countries, or both) *7 C₅ resin: Produced by ExxonMobil Chemical Company, product name "Escorez® 1102B" *8 C₉ resin: Produced by JX Nippon Oil & Energy Corporation, product name "Nisseki Neopolymer® 140" *9 C₅-C₉ petroleum resin: Produced by Nippon Zeon Co., Ltd., product name "Quinton® G100B" *10 Dicyclopentadiene resin: Produced by Nippon Zeon Co., Ltd., product name "Quinton® 1105" *11 Rosin resin: Produced by Taishamatsu essential oil Co., Ltd., product name "Highrosin® S" *12 Alkyl phenolic resin: Produced by SI Group, Inc., product name "R7510PJ" *13 Terpene phenolic resin: Produced by Yasuhara Chemical Co., Ltd., product name "YS POLYSTER® S145" *14 Petroleum-based oil: Produced by Japan Energy Corporation, product name "Process X-140" *15 Natural product-based oil: Produced by The Nisshin OilliO Group, Ltd., product name "Refined Palm Oil J (S)" *16 Antioxidant: N-(1,3-Dimethylbutyl)-N'-phenyl-p-phenylenediamine, produced by Ouchi Shinko Chemical Industrial Co., Ltd., product name "NOCRAC 6C" *17 Vulcanization accelerator A: 1,3-Diphenyl guanidine, produced by Sumitomo Chemical Co., Ltd., product name "SOXINOL® D-G" (SOXINOL is a registered trademark in Japan, other countries, or both) *18 Vulcanization accelerator B: Dibenzothiazolyl disulfide, produced by Ouchi Shinko Chemical Industrial Co., Ltd., product name "NOCCELER® DM-P" (NOCCELER is a registered trademark in Japan, other countries, or both) *19 Vulcanization accelerator C: N-cyclohexyl-2-benzothiazolylsulfenamide, produced by Ouchi Shinko Chemical Industrial Co., Ltd., product name "NOCCELER® CZ-G" *20 Vulcanization accelerator D: N-tert-butyl-2-benzothiazolylsulfenamide, produced by Ouchi Shinko Chemical Industrial Co., Ltd., product name "NOCCELER® NS" | | | | | | | | | |

It can be seen from Tables 1-3 that when the tire frame is formed from a resin composition (resin material 100 mass%) and a resin composition (resin material 100 mass%) is also used in the coating layer of the reinforcement member in the reinforcement layer, ride comfort of the tire is improved without causing deterioration of wet performance of the tire through use of tread rubber for which E'_{0°C} is no greater than 30 MPa, tan δ_{0°C} is no greater than 0.5, and tan δ_{30°C} - tan δ_{60°C} is no greater than 0.08.

In contrast, the tires in Comparative Examples 1 and 2 had poor low temperature fuel efficiency and a large difference between the index values for normal temperature fuel efficiency and low temperature fuel efficiency, the tire in Comparative Example 3 had poor normal temperature fuel efficiency and low temperature fuel efficiency, and the tire in Comparative Example 4 had poor low temperature fuel efficiency and ride comfort. The tires in these comparative examples had evaluations of C or worse for at least two evaluation items.

### (Comparative Examples 5 and 6 and Examples 20-23)

A tire frame (tire case) was produced in the same way as in Examples 1-19 and Comparative Examples 1-4.

Next, a reinforcement layer was provided outward of the tire frame in a tire radial direction using steel cord that had been coated with a resin composition of a formulation shown in Table 4.

Tread rubber formed from a rubber composition of a formulation shown in Table 4 was then provided outward of the reinforcement layer in the tire radial direction, and vulcanization was subsequently carried out. Through this process, a tire (pneumatic tire) was produced.

The previously described methods were used in order to measure the organic acid content in the rubber composition used in the tread rubber, the loss tangent (tan δ) and the storage modulus (E') of the tread rubber, and the tensile strength (Tb) of the tread rubber.

The produced tire was evaluated by the previously described methods in order to evaluate fuel efficiency, wet performance, handling performance on a dry road surface, and ride comfort.

The results in evaluation of fuel efficiency were expressed as index values relative to the fuel efficiency at low temperature of the tire in Example 1, which was set as 100, and were evaluated according to the previously shown index.

The results in evaluation of wet performance were expressed as index values relative to the subjective evaluation score for the tire in Example 1, which was set as 100. The results are shown in Table 4.

**Table 4**

| | | | Comparative Example 5 | Example 20 | Example 21 | Example 22 | Comparative Example 6 | Example 23 |
|---|---|---|---|---|---|---|---|---|
| | Natural rubber *1 | | 100 | 100 | 100 | 100 | 40 | 100 |
| | Polvbutadiene rubber *2 | | - | - | - | - | - | - |
| | Styrene-butadiene copolymer rubber *3 | | - | - | - | - | 60 | - |
| | Carbon black *4 | | 5 | 5 | 5 | 5 | 5 | 5 |
| | Silica *5 | | 50 | 50 | 50 | 50 | 50 | 50 |
| | Silane coupling agent *6 | | 4 | 4 | 4 | 4 | 4 | 4 |
| | C₅ resin *7 | | - | - | - | - | - | 15 |
| | C₉ resin *8 | | 15 | 15 | 15 | 15 | 15 | - |
| | C₅-C₉ resin *9 | | - | - | - | - | - | - |
| | Dicyclopentadiene resin *10 | | - | - | - | - | - | - |
| | Rosin resin *11 | Parts by | - | - | - | - | - | - |
| | Alkvl phenolic resin *12 | mass | - | - | - | - | - | - |
| | Terpene phenolic resin *13 | | - | - | - | - | - | - |
| Tread rubber | Petroleum-based oil *14 | | 2 | 2 | 2 | 2 | 2 | 2 |
| formulation | Natural product-based oil *15 | | - | - | - | - | - | - |
| | Antioxidant *16 | | 1 | 1 | 1 | 1 | 1 | 1 |
| | Stearic acid | | 1 | 1 | 1 | 1 | 1 | 1 |
| | Zinc oxide | | 2.5 | 2.5 | 2.5 | 2.5 | 2.5 | 2.5 |
| | Vulcanization accelerator A *17 | | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 |
| | Vulcanization accelerator C *19 | | 1 | 1 | 1 | 1 | 1 | 1 |
| | Vulcanization accelerator D *20 | | - | - | - | - | - | - |
| | Sulfur | | 1.9 | 1.9 | 1.9 | 1.9 | 1.9 | 1.9 |
| | Percentage of isoprene-based rubber in rubber component | Mass% | 100 | 100 | 100 | 100 | 40 | 100 |
| | Percentage of silica in filler | | 90.9 | 90.9 | 90.9 | 90.9 | 90.9 | 90.9 |
| | Organic acid content | Mass% | 2.3 | 2.3 | 2.3 | 2.3 | 1.5 | 2.3 |
| | Total amount of vulcanization accelerators | Parts by mass | 2.9 | 2.9 | 2.9 | 2.9 | 2.9 | 2.9 |
| Tread rubber physical properties | tan δ_{0°C} | - | 0.360 | 0.360 | 0.360 | 0.360 | 0.680 | 0.357 |
| | tan δ_{30°C} | | 0.190 | 0.190 | 0.190 | 0.190 | 0.169 | 0.171 |
| | tan δ_{60°C} | | 0.149 | 0.149 | 0.149 | 0.149 | 0.111 | 0.125 |
| | tan δ_{0°C} - tan δ_{30°C} | | 0.169 | 0.169 | 0.169 | 0.169 | 0.511 | 0.186 |
| | tan δ_{30°C} - tan δ_{60°C} | | 0.042 | 0.042 | 0.042 | 0.042 | 0.078 | 0.046 |
| | E'_{0°C} | MPa | 11.4 | 11.4 | 11.4 | 11.4 | 9.5 | 8.2 |
| | Tb | | 25.4 | 25.4 | 25.4 | 25.4 | 24.3 | 27.4 |
| Tire frame material | | | Resin | Resin | Resin | Resin | Resin | Resin |
| Formulation of resin composition for coating layer of reinforcement layer | TPA*21 | Mass% | 45 | 55 | 70 | 70 | - | - |
| | Rubber *22 | | 55 | 45 | 30 | - | - | - |
| | TPO *23 | | - | - | - | 30 | - | - |
| | TPC *24 | | - | - | - | - | 100 | 100 |
| Tire evaluation results | Normal temperature fuel efficiency | - | AA | AA | AA | AA | B | A |
| | Low temperature fuel efficiency | | A | A | A | A | C | A |
| | Normal temperature fuel efficiency - low temperature fuel efficiency | | A | A | A | A | C | A |
| | Wet performance | Index value | 143 | 143 | 143 | 143 | 123 | 157 |
| | Handling performance on dry road surface | - | C | B | A | A | A | AA |
| | Ride comfort | | B | B | A | A | A | A |

| | | | | | | | | |
|---|---|---|---|---|---|---|---|---|
| *1 to *20: Same as in Tables 1-3 *21 TPA: Polyamide-based thermoplastic elastomer, produced by Ube Industries, Ltd., product name "UBESTA XPA9055X1" *22: Rubber composition formed by compounding 0.525 parts by mass of normal sulfur (produced by Tsurumi Chemical Industry Co., Ltd., normal sulfur, 5% oil treated), 2 parts by mass of N,N'-diphenylmethanebismaleimide, 1.5 parts by mass of a vulcanization accelerator CZ ("NOCCELER CZ" produced by Ouchi Shinko Chemical Industrial Co., Ltd., N-cyclohexyl-2-benzothiazylsulfenamide), 1 part by mass of a vulcanization accelerator TS ("NOCCELER TS" produced by Ouchi Shinko Chemical Industrial Co., Ltd., tetramethylthiuram monosulfide), 2 parts by mass of stearic acid, and 5 parts by mass of zinc oxide relative to 100 parts by mass of acrylonitrile-butadiene copolymer rubber (NBR) *23 TPO: α-Polyolefin-based thermoplastic elastomer, produced by Mitsui Chemicals Co., Ltd., product name "TAFMER MH7010" *24 TPC: Polyester-based thermoplastic elastomer, produced by Du Pont-Toray Co., Ltd., product name "Hytrel 5557" | | | | | | | | |

It can be seen from Comparative Example 5 and Examples 20 and 21 in Table 4 that when tread rubber for which E'_{0°C} is no greater than 30 MPa, tan δ_{0°C} is no greater than 0.5, and tan δ_{30°C} - tan δ_{60°C} is no greater than 0.08 is used, handling performance on a dry road surface is improved through use of a resin composition containing at least 50 mass% of a resin material in the coating layer of the reinforcement member in the reinforcement layer.

Moreover, Example 22 demonstrates that ride comfort and dry handling performance are improved without causing deterioration of wet performance even when a resin composition containing two or more types of resin materials is used.

Furthermore, it can be seen from comparison of Comparative Example 6 and Example 23 that the effects of the presently disclosed tire are displayed even when the type of thermoplastic elastomer is changed.

### (Examples 24-31)

In the same way as in Examples 1-19 and Comparative Examples 1-4, a tire frame (tire case) was produced and a reinforcement layer was provided outward of the tire frame in a tire radial direction by spirally winding, in a tire circumferential direction, steel cord that had been coated with a thermoplastic elastomer.

Tread rubber formed from a rubber composition of a formulation shown in Table 5 was then provided outward of the reinforcement layer in the tire radial direction, and vulcanization was subsequently carried out. Through this process, a tire (pneumatic tire) was produced.

The previously described methods were used in order to measure the organic acid content in the rubber composition used in the tread rubber, the loss tangent (tan δ) and the storage modulus (E') of the tread rubber, and the tensile strength (Tb) of the tread rubber.

The produced tire was evaluated by the previously described methods in order to evaluate fuel efficiency, wet performance, handling performance on a dry road surface, and ride comfort.

The results in evaluation of fuel efficiency were expressed as index values relative to the fuel efficiency at low temperature of the tire in Example 1, which was set as 100, and were evaluated according to the previously shown index.

The results in evaluation of wet performance were expressed as index values relative to the subjective evaluation score for the tire in Example 1, which was set as 100.

Additionally, the following methods were used in order to evaluate high-speed drum durability and heavy-load drum durability. For the purposes of comparison, the high-speed drum durability and the heavy-load drum durability of the tires in Examples 2 and 3 were also evaluated. The results are shown in Table 5.

### (8) High-speed drum durability

Each sample tire was adjusted to an internal pressure of 300 kPa at 25°C ± 2°C indoors, and after the tire had been left for 24 hours, the air pressure of the tire was readjusted. A load of 400 kg was loaded onto the tire and the tire was run on a drum of approximately 3 m in diameter while increasing the speed from 100 km/h by 10 km/h every 10 minutes. The distance at which the tire failed was taken to be the durable distance. This distance was expressed as an index value relative to the value for Example 3, which was set as 100. A higher index value indicates that the tire has better high-speed durability.

### (9) Heavy-load drum durability

An indoor drum test machine was used in order to conduct a test with a speed of 60 km/h, an internal pressure of 900 kPa, and an initial load equivalent to 165% of the maximum load capability stipulated by The European Tire and Rim Technical Organization (ETRTO) Standards Manual, and the running distance until failure occurred was measured. The running distance was expressed as an index value relative to the running distance for Example 3, which was set as 100. A higher index value indicates that the tire has better durability under heavy loads.

**Table 5**

| | | | Example 3 | Example 2 | Example 24 | Example 25 | Example 26 | Example 27 | Example 28 | Example 29 | Example 30 | Example 31 |
|---|---|---|---|---|---|---|---|---|---|---|---|---|
| | Natural rubber *1 | | 80 | 60 | 60 | 60 | 80 | 80 | 60 | 60 | 80 | 80 |
| | Polybutadiene rubber *2 | | 20 | 40 | 40 | 40 | 20 | 20 | 40 | 40 | 20 | 20 |
| | Styrene-butadiene copolymer rubber *3 | | | | | | | | | | | |
| | Carbon black *4 | | 5 | 5 | 5 | 5 | 5 | 5 | 5 | 5 | 5 | 5 |
| | Silica *5 | | 50 | 50 | 50 | 50 | 50 | 50 | 50 | 50 | 50 | 50 |
| | Silane coupling agent *6 | | 4 | 4 | 4 | 4 | 4 | 4 | 4 | 4 | 4 | 4 |
| | C₅ resin *7 | | - | - | - | - | - | - | - | - | - | - |
| | C₉ resin *8 | | 15 | 15 | 15 | 15 | 15 | 15 | 15 | 15 | 15 | 15 |
| | C₅-C₉ resin *9 | | | | | | - | | | | | |
| | Dicyclopentadiene resin *10 | | - | - | - | - | - | - | - | - | - | - |
| | Rosin resin *11 | Parts by mass | - | - | - | - | - | - | - | - | - | - |
| | Alkvl phenolic resin *12 | | - | - | - | - | - | - | - | - | - | - |
| Tread rubber formulation | Terpene phenolic resin *13 | | - | - | - | - | - | - | - | - | - | - |
| | Petroleum-based oil *14 | | 2 | 2 | 2 | 2 | 2 | 2 | 2 | 2 | 2 | 2 |
| | Natural product-based oil *15 | | - | - | - | - | - | - | - | - | - | - |
| | Antioxidant *16 | | 1 | 1 | 1 | 1 | 1 | 1 | 1 | 1 | 1 | 1 |
| | Stearic acid | | 1 | 1 | - | - | 2.5 | 2.7 | 1 | 1 | 1 | 1 |
| | Zinc oxide | | 2.5 | 2.5 | 2.5 | 2.5 | 2.5 | 2.5 | 2.5 | 2.5 | 2.5 | 2.5 |
| | Vulcanization accelerator A *17 | | 0.8 | 0.8 | 0.8 | 0.8 | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 | 1.1 | 1.1 | 1.1 | 1.1 |
| | Vulcanization accelerator C *19 | | 1 | 1 | 1 | 1 | 1 | 1 | 1 | 1 | 1 | 1 |
| | Vulcanization accelerator D *20 | | - | - | - | - | - | - | - | - | - | - |
| | Sulfur | | 1.9 | 1.9 | 1.9 | 1.9 | 1.9 | 1.9 | 1.9 | 1.9 | 1.9 | 1.9 |
| | Percentage of isoprene-based rubber in rubber component | Mass% | 80 | 60 | 60 | 60 | 80 | 80 | 60 | 60 | 80 | 80 |
| | Percentage of silica in filler | | 90.9 | 90.9 | 90.9 | 90.9 | 90.9 | 90.9 | 90.9 | 90.9 | 90.9 | 90.9 |
| | Organic acid content | Mass% | 2.0 | 1.7 | 0.4 | 0.5 | 2.5 | 2.6 | 1.7 | 1.7 | 2 | 2 |
| | Total amount of vulcanization accelerators | Parts by mass | 2.9 | 2.9 | 2.9 | 2.9 | 2.9 | 2.9 | 0.2 | 0.3 | 4.8 | 5.2 |
| Tread rubber physical properties | tan δ_{0°C} | - | 0.339 | 0.325 | 0.325 | 0.325 | 0.339 | 0.339 | 0.325 | 0.325 | 0.339 | 0.339 |
| | tan δ_{30°C} | | 0.178 | 0.174 | 0.174 | 0.174 | 0.178 | 0.178 | 0.174 | 0.174 | 0.178 | 0.178 |
| | tan δ_{60°C} | | 0.133 | 0.129 | 0.129 | 0.129 | 0.133 | 0.133 | 0.129 | 0.129 | 0.133 | 0.133 |
| | tan δ_{0°C} - tan δ_{30°C} | | 0.161 | 0.152 | 0.152 | 0.152 | 0.161 | 0.161 | 0.152 | 0.152 | 0.161 | 0.161 |
| | tan δ_{30°C} - tan δ_{60°C} | | 0.045 | 0.044 | 0.044 | 0.044 | 0.045 | 0.045 | 0.044 | 0.044 | 0.045 | 0.045 |
| | E'_{0°C} | MPa | 10.5 | 10.03 | 10.0 | 10.0 | 10.5 | 10.5 | 10.0 | 10.0 | 10.5 | 10.5 |
| | Tb | | 26.6 | 26.8 | 26.8 | 26.8 | 26.6 | 26.6 | 26.8 | 26.8 | 26.6 | 26.6 |
| Tire frame material | | | Resin | Resin | Resin | Resin | Resin | Resin | Resin | Resin | Resin | Resin |
| Material of coating layer of reinforcement layer | | | Resin | Resin | Resin | Resin | Resin | Resin | Resin | Resin | Resin | Resin |
| Tire evaluation results | Normal temperature fuel efficiency | - | A | A | A | A | A | A | A | A | A | A |
| | Low temperature fuel efficiency | | A | A | A | A | A | A | A | A | A | A |
| | Normal temperature fuel efficiency - low temperature fuel efficiency | | A | A | A | A | A | A | A | A | A | A |
| | Wet performance | Index value | 136 | 130 | 130 | 130 | 136 | 136 | 130 | 130 | 136 | 136 |
| | Handling performance on dry road surface | - | A | A | A | A | A | A | A | A | A | A |
| | Ride comfort | | A | A | A | A | A | A | A | A | A | A |
| | High-speed drum durability | Index value | 100 | 100 | 99 | 100 | 100 | 100 | 99 | 100 | 100 | 100 |
| | Heavy-load drum durability | Index value | 100 | 101 | 102 | 102 | 100 | 99 | 101 | 101 | 100 | 99 |

| | | | | | | | | | | | | |
|---|---|---|---|---|---|---|---|---|---|---|---|---|
| *1 to *20: Same as in Tables 1-3 | | | | | | | | | | | | |

It can be seen from the results for Examples 24-27 in Table 5 that the tire has good high-speed drum durability and heavy-load drum durability when the organic acid content in the rubber composition used in the tread rubber is from 0.5 mass% to 2.5 mass%.

Moreover, it can be seen from the results for Examples 28-31 that the tire has good high-speed drum durability and heavy-load drum durability when the amount of vulcanization accelerator compounded in the rubber composition used in the tread rubber is from 0.3 parts by mass to 5.0 parts by mass relative to 100 parts by mass of the rubber component.

### (Examples 32-50 and Comparative Examples 7-10)

A tire was produced by producing a tire frame (tire case) formed mainly from a rubber according to a standard method, providing a reinforcement layer outward of the tire frame in a tire radial direction by spirally winding, in a tire circumferential direction, steel cord that had been coated with a thermoplastic elastomer, and further providing tread rubber formed from a rubber composition of a formulation shown in Tables 6-8 outward of the reinforcement layer in the tire radial direction.

Note that the coating layer of the steel cord in the reinforcement layer was formed from a thermoplastic elastomer and the percentage of resin material therein was 100 mass%. The thermoplastic elastomer used in the coating layer of the steel cord was the product "UBESTA XPA9055X1" (polyamide-based thermoplastic elastomer) produced by Ube Industries, Ltd.

The previously described methods were used in order to measure the organic acid content in the rubber composition used in the tread rubber, the loss tangent (tan δ) and the storage modulus (E') of the tread rubber, and the tensile strength (Tb) of the tread rubber.

The produced tire was evaluated by the previously described methods in order to evaluate fuel efficiency, wet performance, handling performance on a dry road surface, and ride comfort.

The results in evaluation of fuel efficiency were expressed as index values relative to the fuel efficiency at low temperature of the tire in Example 32, which was set as 100, and were evaluated according to the previously shown index.

The results in evaluation of wet performance were expressed as index values relative to the subjective evaluation score for the tire in Example 32, which was set as 100. The results are shown in Tables 6-8.

**Table 6**

| | | | Example 32 | Example 33 | Example 34 | Example 35 | Example 36 | Comparative Example 7 | Example 37 | Example 38 |
|---|---|---|---|---|---|---|---|---|---|---|
| | Natural rubber *1 | | 40 | 60 | 80 | 100 | 40 | 40 | 100 | 100 |
| | Polvbutadiene rubber *2 | | 60 | 40 | 20 | - | 60 | - | - | - |
| | Styrene-butadiene copolymer rubber *3 | | - | - | - | - | - | 60 | - | - |
| | Carbon black *4 | | 5 | 5 | 5 | 5 | 5 | 5 | 5 | 5 |
| | Silica *5 | | 50 | 50 | 50 | 50 | 50 | 50 | 50 | 50 |
| | Silane coupling agent *6 | | 4 | 4 | 4 | 4 | 4 | 4 | 4 | 4 |
| | C₅ resin *7 | | - | - | - | - | - | - | 15 | - |
| | C₉ resin *8 | | 2 | 15 | 15 | 15 | 15 | 15 | - | - |
| | C₅-C₉ resin *9 | | - | - | - | - | - | - | - | 15 |
| | Dicyclopentadiene resin *10 | | - | - | - | - | - | - | - | - |
| | Rosin resin *11 | Parts by mass | - | - | - | - | - | - | - | - |
| | Alkvl phenolic resin *12 | | - | - | - | - | - | - | - | - |
| Tread rubber formulation | Terpene phenolic resin *13 | | - | - | - | - | - | - | - | - |
| | Petroleum-based oil *14 | | 2 | 2 | 2 | 2 | 2 | 2 | 2 | 2 |
| | Natural product-based oil *15 | | - | - | - | - | - | - | - | - |
| | Antioxidant *16 | | 1 | 1 | 1 | 1 | 1 | 1 | 1 | 1 |
| | Stearic acid | | 1 | 1 | 1 | 1 | 1 | 1 | 1 | 1 |
| | Zinc oxide | | 2.5 | 2.5 | 2.5 | 2.5 | 2.5 | 2.5 | 2.5 | 2.5 |
| | Vulcanization accelerator A *17 | | 0.8 | 0.8 | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 | 1.1 | 1.1 |
| | Vulcanization accelerator C *19 | | 1 | 1 | 1 | 1 | 1 | 1 | 1 | 1 |
| | Vulcanization accelerator D *20 | | - | - | - | - | - | - | - | - |
| | Sulfur | | 1.9 | 1.9 | 1.9 | 1.9 | 1.9 | 1.9 | 1.9 | 1.9 |
| | Percentage of isoprene-based rubber in rubber component | Mass% | 40 | 60 | 80 | 100 | 40 | 40 | 100 | 100 |
| | Percentage of silica in filler | | 90.9 | 90.9 | 90.9 | 90.9 | 90.9 | 90.9 | 90.9 | 90.9 |
| | Organic acid content | Mass% | 1.5 | 1.7 | 2.0 | 2.3 | 1.5 | 1.5 | 2.3 | 2.3 |
| | Total amount of vulcanization accelerators | Parts by mass | 2.9 | 2.9 | 2.9 | 2.9 | 2.9 | 2.9 | 2.9 | 2.9 |
| Tread rubber physical properties | tan δ_{0°C} | - | 0310 | 0.325 | 0.339 | 0.360 | 0.424 | 0.680 | 0.357 | 0.364 |
| | tan δ_{30°C} | | 0.170 | 0.174 | 0.178 | 0.190 | 0.205 | 0.169 | 0.171 | 0.175 |
| | tan δ_{60°C} | | 0.120 | 0.129 | 0.133 | 0.149 | 0.163 | 0.111 | 0.125 | 0.122 |
| | tan δ_{0°C} - tan δ_{30°C} | | 0.137 | 0.152 | 0.161 | 0.169 | 0.219 | 0.511 | 0.186 | 0.189 |
| | tan δ_{30°C} - tan δ_{60°C} | | 0.050 | 0.044 | 0.045 | 0.042 | 0.042 | 0.078 | 0.046 | 0.052 |
| | E'_{0°C} | MPa | 26.0 | 10.0 | 10.5 | 11.4 | 10.3 | 9.5 | 8.2 | 8.4 |
| | Tb | | 30.7 | 26.8 | 26.6 | 25.4 | 27.1 | 24.3 | 27.4 | 27.0 |
| Tire frame material | | | Rubber | Rubber | Rubber | Rubber | Rubber | Rubber | Rubber | Rubber |
| Material of coating layer of reinforcement laver | | | Resin | Resin | Resin | Resin | Resin | Resin | Resin | Resin |
| Tire evaluation results | Normal temperature fuel efficiency | - | B | A | A | AA | B | B | A | A |
| | Low temperature fuel efficiency | | C | A | A | A | B | C | A | A |
| | Normal temperature fuel efficiency - low temperature fuel efficiency | | B | A | A | A | A | C | A | A |
| | Wet performance | Index value | 100 | 130 | 136 | 143 | 114 | 123 | 157 | 157 |
| | Handling performance on dry road surface | - | A | B | B | B | B | B | B | B |
| | Ride comfort | | B | A | A | A | A | A | A | A |

**Table 7**

| | | | Example 39 | Example 40 | Example 41 | Example 42 | Example 43 | Example 44 | Comparative Example 8 | Comparative Example 9 |
|---|---|---|---|---|---|---|---|---|---|---|
| | Natural rubber *1 | | 100 | 100 | 100 | 100 | 100 | 100 | 100 | 100 |
| | Polybutadiene rubber *2 | | - | - | - | - | - | - | - | - |
| | Styrene-butadiene copolymer rubber *3 | | - | - | - | - | - | - | - | - |
| | Carbon black *4 | | 5 | 5 | 5 | 5 | 5 | 5 | 5 | 5 |
| | Silica *5 | | 50 | 50 | 50 | 50 | 50 | 50 | 50 | 50 |
| | Silane coupling agent *6 | | 4 | 4 | 4 | 4 | 4 | 4 | 4 | 4 |
| | C₅ resin *7 | | - | - | - | - | - | - | - | - |
| | C₉ resin *8 | | - | - | - | - | 8 | 30 | 2 | 45 |
| | C₅-C₉ resin *9 | | - | - | - | - | - | - | - | - |
| | Dicyclopentadiene resin *10 | | 15 | - | - | - | - | - | - | - |
| | Rosin resin *11 | Parts by mass | - | 15 | - | - | - | - | - | - |
| | Alkyl phenolic resin *12 | | - | - | 15 | - | - | - | - | - |
| Tread rubber formulation | Terpene phenolic resin *13 | | - | - | - | 15 | - | - | - | - |
| | Petroleum-based oil *14 | | 2 | 2 | 2 | 2 | 2 | 2 | 2 | 2 |
| | Natural product-based oil *15 | | - | - | - | - | - | - | - | - |
| | Antioxidant *16 | | 1 | 1 | 1 | 1 | 1 | 1 | 1 | 1 |
| | Stearic acid | | 1 | 1 | 1 | 1 | 1 | 1 | 1 | 1 |
| | Zinc oxide | | 2.5 | 2.5 | 2.5 | 2.5 | 2.5 | 2.5 | 2.5 | 2.5 |
| | Vulcanization accelerator A *17 | | 0.8 | 0.8 | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 | 1.1 | 1.1 |
| | Vulcanization accelerator C *19 | | 1 | 1 | 1 | 1 | 1 | 1 | 1 | 1 |
| | Vulcanization accelerator D *20 | | - | - | - | - | - | - | - | - |
| | Sulfur | | 1.9 | 1.9 | 1.9 | 1.9 | 1.9 | 1.9 | 1.9 | 1.9 |
| | Percentage of isoprene-based rubber in rubber component | Mass% | 100 | 100 | 100 | 100 | 100 | 100 | 100 | 100 |
| | Percentage of silica in filler | | 90.9 | 90.9 | 90.9 | 90.9 | 90.9 | 90.9 | 90.9 | 90.9 |
| | Organic acid content | Mass% | 2.3 | 2.3 | 2.3 | 2.3 | 2.3 | 2.3 | 2.3 | 2.3 |
| | Total amount of vulcanization accelerators | Parts by mass | 2.9 | 2.9 | 2.9 | 2.9 | 2.9 | 2.9 | 2.9 | 2.9 |
| Tread physical properties | tan δ_{0°C} | - | 0.382 | 0.283 | 0.319 | 0.352 | 0.329 | 0.425 | 0.327 | 0.548 |
| | tan δ_{30°C} | | 0.193 | 0.198 | 0.214 | 0.204 | 0.178 | 0.218 | 0.232 | 0.227 |
| | tan δ_{60°C} | | 0.139 | 0.195 | 0.213 | 0.183 | 0.138 | 0.172 | 0.148 | 0.208 |
| | tan δ_{0°C} - tan δ_{30°C} | | 0.189 | 0.085 | 0.105 | 0.148 | 0.152 | 0.206 | 0.095 | 0.321 |
| | tan δ_{30°C} - tan δ_{60°C} | | 0.054 | 0.003 | 0.001 | 0.021 | 0.040 | 0.046 | 0.083 | 0.019 |
| | E'_{0°C} | MPa | 8.7 | 19.0 | 14.8 | 12.1 | 11.1 | 12.2 | 25.2 | 15.5 |
| | Tb | | 27.3 | 25.5 | 26.9 | 28.1 | 26.6 | 22.8 | 25.0 | 25.0 |
| Tire frame material | | | Rubber | Rubber | Rubber | Rubber | Rubber | Rubber | Rubber | Rubber |
| Material of coating layer of reinforcement laver | | | Resin | Resin | Resin | Resin | Resin | Resin | Resin | Resin |
| Tire evaluation results | Normal temperature fuel efficiency | - | A | B | A | B | A | B | B | C |
| | Low temperature fuel efficiency | | A | B | A | B | A | B | D | D |
| | Normal temperature fuel efficiency - low temperature fuel efficiency | | A | A | A | A | A | A | D | A |
| | Wet performance | Index value | 150 | 140 | 137 | 164 | 141 | 164 | 107 | 179 |
| | Handling performance on dry road surface | - | B | A | B | B | B | B | A | B |
| | Ride comfort | | A | B | B | A | A | A | B | B |

**Table 8**

| | | | Example 45 | Example 46 | Example 47 | Example 48 | Comparative Example 10 | Example 49 | Example 50 |
|---|---|---|---|---|---|---|---|---|---|
| | Natural rubber *1 | | 100 | 100 | 100 | 100 | 40 | 40 | 100 |
| | Polvbutadiene rubber *2 | | - | - | - | - | 60 | 60 | - |
| | Styrene-butadiene copolymer rubber *3 | | - | - | - | - | - | - | - |
| | Carbon black *4 | | 5 | 15 | 5 | 5 | 5 | 5 | 5 |
| | Silica *5 | | 50 | 60 | 50 | 50 | 50 | 50 | 50 |
| | Silane coupling agent *6 | | 4 | 4.8 | 4 | 4 | 4 | 4 | 4 |
| | C₅ resin *7 | | - | - | - | - | - | - | - |
| | C₉ resin *8 | | 15 | 8 | 15 | 15 | 2 | 2 | 45 |
| | C₅-C₉ resin *9 | | - | - | - | - | - | - | - |
| | Dicyclopentadiene resin *10 | | - | - | - | - | - | - | - |
| | Rosin resin *11 | Parts by mass | - | - | - | - | - | - | - |
| | Alkvl phenolic resin *12 | | - | - | - | - | - | - | - |
| Tread rubber formulation | Terpene phenolic resin *13 | | - | - | - | - | - | - | - |
| | Petroleum-based oil *14 | | - | - | 2 | 2 | 2 | 4 | 2 |
| | Natural product-based oil *15 | | 2 | 17 | - | - | - | - | - |
| | Antioxidant *16 | | 1 | 1 | 1 | 1 | 1 | 1 | 1 |
| | Stearic acid | | 1 | 1 | 1 | 1 | 1 | 1 | 1 |
| | Zinc oxide | | 2.5 | 2.5 | 2.5 | 2.5 | 2.5 | 2.5 | 2.5 |
| | Vulcanization accelerator A *17 | | 0.8 | - | - | 0.8 | 0.8 | 0.8 | 0.8 |
| | Vulcanization accelerator B *18 | | 1.1 | - | - | 1.1 | 1.1 | 1.1 | 1.1 |
| | Vulcanization accelerator C *19 | | 1 | - | - | 1 | 1 | 1 | 1 |
| | Vulcanization accelerator D *20 | | - | 2.1 | 2.1 | - | - | - | - |
| | Sulfur | | 1.9 | 1.9 | 1.9 | 1.9 | 1.9 | 1.9 | 1.9 |
| | Percentage of isoprene-based rubber in rubber component | Mass% | 100 | 100 | 100 | 100 | 40 | 40 | 100 |
| | Percentage of silica in filler | | 90.9 | 80.0 | 90.9 | 90.9 | 90.9 | 90.9 | 90.9 |
| | Organic acid content | Mass% | 2.3 | 2.3 | 2.3 | 2.3 | 1.5 | 1.5 | 2.3 |
| | Total amount of vulcanization accelerators | Parts by mass | 2.9 | 2.1 | 2.1 | 2.9 | 2.9 | 2.9 | 2.9 |
| Tread rubber physical properties | tan δ_{0°C} | - | 0.413 | 0.346 | 0.311 | 0.356 | 0.330 | 0.330 | 0.500 |
| | tan δ_{30°c} | | 0.213 | 0.212 | 0.183 | 0.192 | 0.180 | 0.180 | 0.217 |
| | tan δ_{60°C} | | 0.169 | 0.163 | 0.140 | 0.147 | 0.130 | 0.130 | 0.203 |
| | tan δ_{0°C} - tan δ_{30°C} | | 0.200 | 0.134 | 0.128 | 0.164 | 0.150 | 0.150 | 0.283 |
| | tan δ_{30°C} - tan δ_{60°C} | | 0.044 | 0.049 | 0.043 | 0.045 | 0.050 | 0.050 | 0.014 |
| | E'_{0°C} | MPa | 13.2 | 10.7 | 9.8 | 11.3 | 35.0 | 30.0 | 15.5 |
| | Tb | | 25.1 | 22.2 | 24.2 | 24.9 | 28.6 | 28.6 | 25.0 |
| Tire frame material | | | Rubber | Rubber | Rubber | Rubber | Rubber | Rubber | Rubber |
| Material of coating layer of reinforcement layer | | | Resin | Resin | Resin | Resin | Resin | Resin | Resin |
| Tire evaluation results | Normal temperature fuel efficiency | - | B | B | A | B | B | B | C |
| | Low temperature fuel efficiency | | B | B | A | B | C | C | C |
| | Normal temperature fuel efficiency - low temperature fuel efficiency | | A | A | A | A | B | B | A |
| | Wet performance | Index value | 133 | 137 | 136 | 141 | 97 | 98 | 179 |
| | Handling performance on dry road surface | - | B | B | B | B | A | A | B |
| | Ride comfort | | B | A | A | A | C | C | B |

| | | | | | | | | | |
|---|---|---|---|---|---|---|---|---|---|
| *1 to *20: Same as in Tables 1-3 | | | | | | | | | |

It can be seen from Tables 6-8 that even in a situation in which the tire frame is a normal tire frame formed mainly from a rubber, when a resin composition (resin material 100 mass%) is used in the coating layer of the reinforcement member in the reinforcement layer, ride comfort is improved without causing deterioration of wet performance through use of tread rubber for which E'_{0°C} is no greater than 30 MPa, tan δ_{0°C} is no greater than 0.5, and tan δ_{30°C} - tan δ_{60°C} is no greater than 0.08.

In contrast, the tires in Comparative Examples 7 and 8 had poor low temperature fuel efficiency and a large difference between the index values for normal temperature fuel efficiency and low temperature fuel efficiency, the tire in Comparative Example 9 had poor normal temperature fuel efficiency and low temperature fuel efficiency, and the tire in Comparative Example 10 had poor low temperature fuel efficiency and ride comfort. The tires in these comparative examples had evaluations of C or worse for at least two evaluation items.

### (Comparative Examples 11 and 12 and Examples 51-54)

A tire was produced by producing a tire frame (tire case) formed mainly from a rubber according to a standard method, providing a reinforcement layer outward of the tire frame in a tire radial direction by spirally winding, in a tire circumferential direction, steel cord that had been coated with a resin composition of a formulation shown in Table 9, and further providing tread rubber formed from a rubber composition of a formulation shown in Table 9 outward of the reinforcement layer in the tire radial direction.

The previously described methods were used in order to measure the organic acid content in the rubber composition used in the tread rubber, the loss tangent (tan δ) and the storage modulus (E') of the tread rubber, and the tensile strength (Tb) of the tread rubber.

The produced tire was evaluated by the previously described methods in order to evaluate fuel efficiency, wet performance, handling performance on a dry road surface, and ride comfort.

The results in evaluation of fuel efficiency were expressed as index values relative to the fuel efficiency at low temperature of the tire in Example 32, which was set as 100, and were evaluated according to the previously shown index.

The results in evaluation of wet performance were expressed as index values relative to the subjective evaluation score for the tire in Example 32, which was set as 100. The results are shown in Table 9.

**Table 9**

| | | | Comparative Example 11 | Example 51 | Example 52 | Example 53 | Comparative Example 12 | Example 54 |
|---|---|---|---|---|---|---|---|---|
| | Natural rubber *1 | | 100 | 100 | 100 | 100 | 40 | 100 |
| | Polvbutadiene rubber *2 | | - | - | - | - | - | - |
| | Styrene-butadiene copolymer rubber *3 | | - | - | - | - | 60 | - |
| | Carbon black *4 | | 5 | 5 | 5 | 5 | 5 | 5 |
| | Silica *5 | | 50 | 50 | 50 | 50 | 50 | 50 |
| | Silane coupling agent *6 | | 4 | 4 | 4 | 4 | 4 | 4 |
| | C₅ resin *7 | | - | - | - | - | - | 15 |
| | C₉ resin *8 | | 15 | 15 | 15 | 15 | 15 | - |
| | C₅-C₉ resin *9 | | - | - | - | - | - | - |
| | Dicyclopentadiene resin *10 | | - | - | - | - | - | - |
| | Rosin resin *11 | Parts by mass | - | - | - | - | - | - |
| | Alkyl phenolic resin *12 | | - | - | - | - | - | - |
| | Terpene phenolic resin *13 | | - | - | - | - | - | - |
| Tread rubber formulation | Petroleum-based oil *14 | | 2 | 2 | 2 | 2 | 2 | 2 |
| | Natural product-based oil *15 | | - | - | - | - | - | - |
| | Antioxidant *16 | | 1 | 1 | 1 | 1 | 1 | 1 |
| | Stearic acid | | 1 | 1 | 1 | 1 | 1 | 1 |
| | Zinc oxide | | 2.5 | 2.5 | 2.5 | 2.5 | 2.5 | 2.5 |
| | Vulcanization accelerator A *17 | | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 |
| | Vulcanization accelerator C *19 | | 1 | 1 | 1 | 1 | 1 | 1 |
| | Vulcanization accelerator D *20 | | - | - | - | - | - | - |
| | Sulfur | | 1.9 | 1.9 | 1.9 | 1.9 | 1.9 | 1.9 |
| | Percentage of isoprene-based rubber in rubber component | Mass% | 100 | 100 | 100 | 100 | 40 | 100 |
| | Percentage of silica in filler | | 90.9 | 90.9 | 90.9 | 90.9 | 90.9 | 90.9 |
| | Organic acid content | Mass% | 2.3 | 2.3 | 2.3 | 2.3 | 1.5 | 2.3 |
| | Total amount of vulcanization accelerators | Parts by mass | 2.9 | 2.9 | 2.9 | 2.9 | 2.9 | 2.9 |
| Tread rubber physical properties | tan δ_{0°C} | - | 0.360 | 0.360 | 0.360 | 0.360 | 0.680 | 0.357 |
| | tan δ_{30°C} | | 0.190 | 0.190 | 0.190 | 0.190 | 0.169 | 0.171 |
| | tan δ_{60°C} | | 0.149 | 0.149 | 0.149 | 0.149 | 0.111 | 0.125 |
| | tan δ_{0°C} - tan δ_{30°C} | | 0.169 | 0.169 | 0.169 | 0.169 | 0.511 | 0.186 |
| | tan δ_{30°C} - tan δ_{60°C} | | 0.042 | 0.042 | 0.042 | 0.042 | 0.078 | 0.046 |
| | E'_{0°C} | MPa | 11.4 | 11.4 | 11.4 | 11.4 | 9.5 | 8.2 |
| | Tb | | 25.4 | 25.4 | 25.4 | 25.4 | 24.3 | 27.4 |
| Tire frame material | | | Rubber | Rubber | Rubber | Rubber | Rubber | Rubber |
| Formulation of resin composition for coating layer of reinforcement layer | TPA *21 | Mass% | 45 | 55 | 70 | 70 | - | - |
| | Rubber *22 | | 55 | 45 | 30 | - | - | - |
| | TPO *23 | | - | - | - | 30 | - | - |
| | TPC *24 | | - | - | - | - | 100 | 100 |
| Tire evaluation results | Normal temperature fuel efficiency | - | AA | AA | AA | AA | B | A |
| | Low temperature fuel efficiency | | A | A | A | A | C | A |
| | Normal temperature fuel efficiency - low temperature fuel efficiency | | A | A | A | A | C | A |
| | Wet performance | Index value | 143 | 143 | 143 | 143 | 123 | 157 |
| | Handling performance on dry road surface | - | C | B | A | A | A | AA |
| | Ride comfort | | B | B | A | A | A | A |

| | | | | | | | | |
|---|---|---|---|---|---|---|---|---|
| *1 to *20: Same as in Tables 1-3 *21 to *24: Same as in Table 4 | | | | | | | | |

It can be seen from Comparative Example 11 and Examples 51 and 52 in Table 9 that even in a situation in which the tire frame is a normal tire frame formed mainly from a rubber, when tread rubber for which E'_{0°C} is no greater than 30 MPa, tan δ_{0°C} is no greater than 0.5, and tan δ_{30°C} - tan δ_{60°C} is no greater than 0.08 is used, handling performance on a dry road surface is improved through use of a resin composition containing at least 50 mass% of a resin material in the coating layer of the reinforcement member in the reinforcement layer.

Moreover, Example 53 demonstrates that ride comfort and dry handling performance are improved without causing deterioration of wet performance even when a resin composition containing two or more types of resin materials is used.

Furthermore, it can be seen from comparison of Comparative Example 12 and Example 54 that the effects of the presently disclosed tire are displayed even when the type of thermoplastic elastomer is changed.

### (Examples 55-62)

In the same way as in Examples 32-50 and Comparative Examples 7-10, a tire frame (tire case) formed mainly from a rubber was produced and a reinforcement layer was provided outward of the tire frame in a tire radial direction by spirally winding, in a tire circumferential direction, steel cord that had been coated with a thermoplastic elastomer.

Tread rubber formed from a rubber composition of a formulation shown in Table 10 was then provided outward of the reinforcement layer in the tire radial direction. Through this process, a tire was produced.

The previously described methods were used in order to measure the organic acid content in the rubber composition used in the tread rubber, the loss tangent (tan δ) and the storage modulus (E') of the tread rubber, and the tensile strength (Tb) of the tread rubber.

The produced tire was evaluated by the previously described methods in order to evaluate fuel efficiency, wet performance, handling performance on a dry road surface, and ride comfort.

The results in evaluation of fuel efficiency were expressed as index values relative to the fuel efficiency at low temperature of the tire in Example 32, which was set as 100, and were evaluated according to the previously shown index.

The results in evaluation of wet performance were expressed as index values relative to the subjective evaluation score for the tire in Example 32, which was set as 100.

Additionally, the previously described methods were used in order to evaluate high-speed drum durability and heavy-load drum durability. For the purposes of comparison, the high-speed drum durability and the heavy-load drum durability of the tires in Examples 33 and 34 were also evaluated. Note that the results in evaluation of high-speed drum durability and heavy-load drum durability were expressed as index values relative to the values in Example 33, which were each set as 100. The results are shown in Table 10.

**Table 10**

| | | | Example 34 | Example 33 | Example 55 | Example 56 | Example 57 | Example 58 | Example 59 | Example 60 | Example 61 | Example 62 |
|---|---|---|---|---|---|---|---|---|---|---|---|---|
| | Natural rubber *1 | | 80 | 60 | 60 | 60 | 80 | 80 | 60 | 60 | 80 | 80 |
| | Polybutadiene rubber *2 | | 20 | 40 | 40 | 40 | 20 | 20 | 40 | 40 | 20 | 20 |
| | Styrene-butadiene copolymer rubber *3 | | - | - | - | - | - | - | - | - | - | - |
| | Carbon black *4 | | 5 | 5 | 5 | 5 | 5 | 5 | 5 | 5 | 5 | 5 |
| | Silica *5 | | 50 | 50 | 50 | 50 | 50 | 50 | 50 | 50 | 50 | 50 |
| | Silane coupling agent *6 | | 4 | 4 | 4 | 4 | 4 | 4 | 4 | 4 | 4 | 4 |
| | C₅ resin *7 | | - | - | - | - | - | - | - | - | - | - |
| | C₉ resin *8 | | 15 | 15 | 15 | 15 | 15 | 15 | 15 | 15 | 15 | 15 |
| | C₅-C₉ resin *9 | | | | | | | - | | | | |
| | Dicyclopentadiene resin *10 | | - | - | - | - | - | - | - | - | - | - |
| | Rosin resin *11 | Parts by mass | - | - | - | - | - | - | - | - | - | - |
| | Alkvl phenolic resin *12 | | - | - | - | - | - | - | - | - | - | - |
| Tread rubber formulation | Terpene phenolic resin *13 | | - | - | - | - | - | - | - | - | - | - |
| | Petroleum-based oil *14 | | 2 | 2 | 2 | 2 | 2 | 2 | 2 | 2 | 2 | 2 |
| | Natural product-based oil *15 | | - | - | - | - | - | - | - | - | - | - |
| | Antioxidant *16 | | 1 | 1 | 1 | 1 | 1 | 1 | 1 | 1 | 1 | 1 |
| | Stearic acid | | 1 | 1 | - | - | 2.5 | 2.7 | 1 | 1 | 1 | 1 |
| | Zinc oxide | | 2.5 | 2.5 | 2.5 | 2.5 | 2.5 | 2.5 | 2.5 | 2.5 | 2.5 | 2.5 |
| | Vulcanization accelerator A *17 | | 0.8 | 0.8 | 0.8 | 0.8 | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 | 1.1 | 1.1 | 1.1 | 1.1 |
| | Vulcanization accelerator C *19 | | 1 | 1 | 1 | 1 | 1 | 1 | 1 | 1 | 1 | 1 |
| | Vulcanization accelerator D *20 | | - | - | - | - | - | - | - | - | - | - |
| | Sulfur | | 1.9 | 1.9 | 1.9 | 1.9 | 1.9 | 1.9 | 1.9 | 1.9 | 1.9 | 1.9 |
| | Percentage of isoprene-based rubber in rubber component | Mass% | 80 | 60 | 60 | 60 | 80 | 80 | 60 | 60 | 80 | 80 |
| | Percentage of silica in filler | | 90.9 | 90.9 | 90.9 | 90.9 | 90.9 | 90.9 | 90.9 | 90.9 | 90.9 | 90.9 |
| | Organic acid content | Mass% | 2.0 | 1.7 | 0.4 | 0.5 | 2.5 | 2.6 | 1.7 | 1.7 | 2 | 2 |
| | Total amount of vulcanization accelerators | Parts by mass | 2.9 | 2.9 | 2.9 | 2.9 | 2.9 | 2.9 | 0.2 | 0.3 | 4.8 | 5.2 |
| Tread rubber physical properties | tan δ_{0°C} | - | 0.339 | 0.325 | 0.325 | 0.325 | 0.339 | 0.339 | 0.325 | 0.325 | 0.339 | 0.339 |
| | tan δ_{30°C} | | 0.178 | 0.174 | 0.174 | 0.174 | 0.178 | 0.178 | 0.174 | 0.174 | 0.178 | 0.178 |
| | tan δ_{60°C} | | 0.133 | 0.129 | 0.129 | 0.129 | 0.133 | 0.133 | 0.129 | 0.129 | 0.133 | 0.133 |
| | tan δ_{0°C} - tan δ_{30°C} | | 0.161 | 0.152 | 0.152 | 0.152 | 0.161 | 0.161 | 0.152 | 0.152 | 0.161 | 0.161 |
| | tan δ_{30°C} - tan δ_{60°C} | | 0.045 | 0.044 | 0.044 | 0.044 | 0.045 | 0.045 | 0.044 | 0.044 | 0.045 | 0.045 |
| | E'_{0°C} | MPa | 10.5 | 10.0 | 10.0 | 10.0 | 10.5 | 10.5 | 10.0 | 10.0 | 10.5 | 10.5 |
| | Tb | | 26.6 | 26.8 | 26.8 | 26.8 | 26.6 | 26.6 | 26.8 | 26.8 | 26.6 | 26.6 |
| Tire frame material | | | Rubber | Rubber | Rubber | Rubber | Rubber | Rubber | Rubber | Rubber | Rubber | Rubber |
| Material of coating layer of reinforcement layer | | | Resin | Resin | Resin | Resin | Resin | Resin | Resin | Resin | Resin | Resin |
| Tire evaluation results | Normal temperature fuel efficiency | - | A | A | A | A | A | A | A | A | A | A |
| | Low temperature fuel efficiency | | A | A | A | A | A | A | A | A | A | A |
| | Normal temperature fuel efficiency - low temperature fuel efficiency | | A | A | A | A | A | A | A | A | A | A |
| | Wet performance | Index value | 136 | 130 | 130 | 130 | 136 | 136 | 130 | 130 | 136 | 136 |
| | Handling performance on dry road surface | - | B | B | B | B | B | B | B | B | B | B |
| | Ride comfort | | A | A | A | A | A | A | A | A | A | A |
| | High-speed drum durability | Index value | 100 | 100 | 99 | 100 | 100 | 100 | 99 | 100 | 100 | 100 |
| | Heavy-load drum durability | Index value | 101 | 100 | 102 | 102 | 100 | 99 | 101 | 101 | 100 | 99 |

| | | | | | | | | | | | | |
|---|---|---|---|---|---|---|---|---|---|---|---|---|
| *1 to *20: Same as in Tables 1-3 | | | | | | | | | | | | |

It can be seen from the results for Examples 55-58 in Table 10 that the tire has good high-speed drum durability and heavy-load drum durability when the organic acid content in the rubber composition used in the tread rubber is from 0.5 mass% to 2.5 mass%.

Moreover, it can be seen from the results for Examples 59-62 that the tire has good high-speed drum durability and heavy-load drum durability when the amount of vulcanization accelerator compounded in the rubber composition used in the tread rubber is from 0.3 parts by mass to 5.0 parts by mass relative to 100 parts by mass of the rubber component.

### (Reference Examples 1-21)

A tire was produced by producing a tire frame (tire case) formed mainly from a rubber according to a standard method, providing a reinforcement layer outward of the tire frame in a tire radial direction by spirally winding, in a tire circumferential direction, steel cord that had been coated with a rubber composition, and further providing tread rubber formed from a rubber composition of a formulation shown in Tables 11-13 outward of the reinforcement layer in the tire radial direction.

A rubber composition used in the coating layer of the steel cord in the reinforcement layer was formed by compounding 60 parts by mass of carbon black (HAF grade carbon black, produced by Asahi Carbon Co., Ltd., product name "Asahi #70"), 7.5 parts by mass of zinc oxide, 1.0 parts by mass of a cobalt fatty acid salt (produced by Rhodia, product name "Manobond C 22.5"), 1.5 parts by mass of an antioxidant 6C (N-1,3-dimethylbutyl-N'-phenyl-p-phenylenediamine, produced by Ouchi Shinko Chemical Industrial Co., Ltd., product name "NOCCELER 6C"), 6.0 parts by mass of sulfur, and 1.0 parts by mass of a vulcanization accelerator DZ (N,N'-dicyclohexyl-2-benzothiazolylsulfenamide, produced by Ouchi Shinko Chemical Industrial Co., Ltd., product name "NOCCELER DZ") relative to 100 parts by mass of natural rubber (RSS).

The previously described methods were used in order to measure the organic acid content in the rubber composition used in the tread rubber, the loss tangent (tan δ) and the storage modulus (E') of the tread rubber, and the tensile strength (Tb) of the tread rubber.

The produced tire was evaluated by the previously described methods in order to evaluate fuel efficiency, wet performance, handling performance on a dry road surface, and ride comfort.

The results in evaluation of fuel efficiency were expressed as index values relative to the fuel efficiency at low temperature of the tire in Reference Example 1, which was set as 100, and were evaluated according to the previously shown index.

The results in evaluation of wet performance were expressed as index values relative to the subjective evaluation score for the tire in Reference Example 1, which was set as 100. The results are shown in Tables 11-13.

**Table 11**

| | | | Reference Example 1 | Reference Example 2 | Reference Example 3 | Reference Example 4 | Reference Example 5 | Reference Example 6 | Reference Example 7 |
|---|---|---|---|---|---|---|---|---|---|
| | Natural rubber *1 | | 40 | 60 | 80 | 100 | 40 | 40 | 100 |
| | Polybutadiene rubber *2 | | 60 | 40 | 20 | - | 60 | - | - |
| | Styrene-butadiene copolymer rubber *3 | | - | - | - | - | - | 60 | - |
| | Carbon black *4 | | 5 | 5 | 5 | 5 | 5 | 5 | 5 |
| | Silica *5 | | 50 | 50 | 50 | 50 | 50 | 50 | 50 |
| | Silane coupling agent *6 | | 4 | 4 | 4 | 4 | 4 | 4 | 4 |
| | C₅ resin *7 | | - | - | - | - | - | - | 15 |
| | C₉ resin *8 | | 2 | 15 | 15 | 15 | 15 | 15 | - |
| | C₅-C₉ resin *9 | | - | - | - | - | - | - | - |
| | Dicyclopentadiene resin *10 | | - | - | - | - | - | - | - |
| | Rosin resin *11 | Parts by mass | - | - | - | - | - | - | - |
| | Alkyl phenolic resin *12 | | - | - | - | - | - | - | - |
| Tread rubber formulation | Terpene phenolic resin *13 | | - | - | - | - | - | - | - |
| | Petroleum-based oil *14 | | 2 | 2 | 2 | 2 | 2 | 2 | 2 |
| | Natural product-based oil *15 | | - | - | - | - | - | - | - |
| | Antioxidant *16 | | 1 | 1 | 1 | 1 | 1 | 1 | 1 |
| | Stearic acid | | 1 | 1 | 1 | 1 | 1 | 1 | 1 |
| | Zinc oxide | | 2.5 | 2.5 | 2.5 | 2.5 | 2.5 | 2.5 | 2.5 |
| | Vulcanization accelerator A *17 | | 0.8 | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 | 1.1 |
| | Vulcanization accelerator C *19 | | 1 | 1 | 1 | 1 | 1 | 1 | 1 |
| | Vulcanization accelerator D *20 | | - | - | - | - | - | - | - |
| | Sulfur | | 1.9 | 1.9 | 1.9 | 1.9 | 1.9 | 1.9 | 1.9 |
| | Percentage of isoprene-based rubber in rubber component | Mass% | 40 | 60 | 80 | 100 | 40 | 40 | 100 |
| | Percentage of silica in filler | | 90.9 | 90.9 | 90.9 | 90.9 | 90.9 | 90.9 | 90.9 |
| | Organic acid content | Mass% | 1.5 | 1.7 | 2.0 | 2.3 | 1.5 | 1.5 | 2.3 |
| | Total amount of vulcanization accelerators | Parts by mass | 2.9 | 2.9 | 2.9 | 2.9 | 2.9 | 2.9 | 2.9 |
| Tread rubber physical properties | tan δ_{0°C} | - | 0.310 | 0.325 | 0.339 | 0.360 | 0.424 | 0.680 | 0.357 |
| | tan δ_{30°C} | | 0.170 | 0.174 | 0.178 | 0.190 | 0.205 | 0.169 | 0.171 |
| | tan δ_{60°C} | | 0.120 | 0.129 | 0.133 | 0.149 | 0.163 | 0.111 | 0.125 |
| | tan δ_{0°C} - tan δ_{30°C} | | 0.137 | 0.152 | 0.161 | 0.169 | 0.219 | 0.511 | 0.186 |
| | tan δ_{30°C} - tan δ_{60°C} | | 0.050 | 0.044 | 0.045 | 0.042 | 0.042 | 0.078 | 0.046 |
| | E'_{0°C} | MPa | 26.0 | 10.0 | 10.5 | 11.4 | 10.3 | 9.5 | 8.2 |
| | Tb | | 30.7 | 26.8 | 26.6 | 25.4 | 27.1 | 24.3 | 27.4 |
| Tire frame material | | | Rubber | Rubber | Rubber | Rubber | Rubber | Rubber | Rubber |
| Material of coating laver of reinforcement laver | | | Rubber | Rubber | Rubber | Rubber | Rubber | Rubber | Rubber |
| Tire evaluation results | Normal temperature fuel efficiency | - | B | A | A | AA | B | B | A |
| | Low temperature fuel efficiency | | C | A | A | A | B | C | A |
| | Normal temperature fuel efficiency - low temperature fuel efficiency | | B | A | A | A | A | C | A |
| | Wet performance | Index value | 100 | 130 | 136 | 143 | 114 | 123 | 157 |
| | Handling performance on dry road surface | - | B | C | C | C | C | C | C |
| | Ride comfort | | B | A | A | A | A | A | A |

**Table 12**

| | | | Reference Example 8 | Reference Example 9 | Reference Example 10 | Reference Example 11 | Reference Example 12 | Reference Example 13 | Reference Example 14 |
|---|---|---|---|---|---|---|---|---|---|
| | Natural rubber *1 | | 100 | 100 | 100 | 100 | 100 | 100 | 100 |
| | Polybutadiene rubber *2 | | - | - | - | - | - | - | - |
| | Styrene-butadiene copolymer rubber *3 | | - | - | - | - | - | - | - |
| | Carbon black *4 | | 5 | 5 | 5 | 5 | 5 | 5 | 5 |
| | Silica *5 | | 50 | 50 | 50 | 50 | 50 | 50 | 50 |
| | Silane coupline agent *6 | | 4 | 4 | 4 | 4 | 4 | 4 | 4 |
| | C₅ resin *7 | | | | | - | | | |
| | C₉ resin *8 | | - | - | - | - | - | 8 | 30 |
| | C₅-C₉ resin *9 | | 15 | - | - | - | - | - | - |
| | Dicyclopentadiene resin *10 | | - | 15 | - | - | - | - | - |
| | Rosin resin *11 | Parts by mass | - | - | 15 | - | - | - | - |
| | Alkvl phenolic resin *12 | | - | - | - | 15 | - | - | - |
| Tread rubber formulation | Terpene phenolic resin *13 | | - | - | - | - | 15 | - | - |
| | Petroleum-based oil *14 | | 2 | 2 | 2 | 2 | 2 | 2 | 2 |
| | Natural product-based oil *15 | | - | - | - | - | - | - | - |
| | Antioxidant *16 | | 1 | 1 | 1 | 1 | 1 | 1 | 1 |
| | Stearic acid | | 1 | 1 | 1 | 1 | 1 | 1 | 1 |
| | Zinc oxide | | 2.5 | 2.5 | 2.5 | 2.5 | 2.5 | 2.5 | 2.5 |
| | Vulcanization accelerator A *17 | | 0.8 | 0.8 | 0.8 | 0.8 | 0.8 | 0.8 | 0.8 |
| | Vulcanization accelerator B *18 | | 1.1 | 1.1 | 1.1 | 1.1 | 1.1 | 1.1 | 1.1 |
| | Vulcanization accelerator C *19 | | 1 | 1 | 1 | 1 | 1 | 1 | 1 |
| | Vulcanization accelerator D *20 | | - | - | - | - | - | - | - |
| | Sulfur | | 1.9 | 1.9 | 1.9 | 1.9 | 1.9 | 1.9 | 1.9 |
| | Percentage of isoprene-based rubber in rubber component | Mass% | 100 | 100 | 100 | 100 | 100 | 100 | 100 |
| | Percentage of silica in filler | | 90.9 | 90.9 | 90.9 | 90.9 | 90.9 | 90.9 | 90.9 |
| | Organic acid content | Mass% | 2.3 | 2.3 | 2.3 | 2.3 | 2.3 | 2.3 | 2.3 |
| | Total amount of vulcanization accelerators | Parts by mass | 2.9 | 2.9 | 2.9 | 2.9 | 2.9 | 2.9 | 2.9 |
| Tread rubber physical properties | tan δ_{0°C} | - | 0.364 | 0.382 | 0.283 | 0.319 | 0.352 | 0.329 | 0.425 |
| | tan δ_{30°C} | | 0.175 | 0.193 | 0.198 | 0.214 | 0.204 | 0.178 | 0.218 |
| | tan δ_{60°C} | | 0.122 | 0.139 | 0.195 | 0.213 | 0.183 | 0.138 | 0.172 |
| | tan δ_{0°C} - tan δ_{30°C} | | 0.189 | 0.189 | 0.085 | 0.105 | 0.148 | 0.152 | 0.206 |
| | tan δ_{30°C} - tan δ_{60°C} | | 0.052 | 0.054 | 0.003 | 0.001 | 0.021 | 0.040 | 0.046 |
| | E'_{0°C} | MPa | 8.4 | 8.7 | 19.0 | 14.8 | 12.1 | 11.1 | 12.2 |
| | Tb | | 27.0 | 27.3 | 25.5 | 26.9 | 28.1 | 26.6 | 22.8 |
| Tire frame material | | | Rubber | Rubber | Rubber | Rubber | Rubber | Rubber | Rubber |
| Material of coating layer of reinforcement laver | | | Rubber | Rubber | Rubber | Rubber | Rubber | Rubber | Rubber |
| Tire evaluation results | Normal temperature fuel efficiency | - | A | A | B | A | B | A | B |
| | Low temperature fuel efficiency | | A | A | B | A | B | A | B |
| | Normal temperature fuel efficiency - low temperature fuel efficiency | | A | A | A | A | A | A | A |
| | Wet performance | Index value | 157 | 150 | 140 | 137 | 164 | 141 | 164 |
| | Handling performance on dry road surface | - | C | C | B | C | C | C | C |
| | Ride comfort | | A | A | B | B | A | A | A |

**Table 13**

| | | | Reference Example 15 | Reference Example 16 | Reference Example 17 | Reference Example 18 | Reference Example 19 | Reference Example 20 | Reference Example 21 |
|---|---|---|---|---|---|---|---|---|---|
| | Natural rubber * 1 | | 100 | 100 | 100 | 100 | 100 | 100 | 40 |
| | Polybutadiene rubber *2 | | - | - | - | - | - | - | 60 |
| | Styrene-butadiene copolymer rubber *3 | | - | - | - | - | - | - | - |
| | Carbon black *4 | | 5 | 5 | 5 | 15 | 5 | 5 | 5 |
| | Silica *5 | | 50 | 50 | 50 | 60 | 50 | 50 | 50 |
| | Silane coupling agent *6 | | 4 | 4 | 4 | 4.8 | 4 | 4 | 4 |
| | C₅ resin *7 | | - | - | - | - | - | - | - |
| | C₉ resin *8 | | 2 | 45 | 15 | 8 | 15 | 15 | 2 |
| | C₅-C₉ resin *9 | | - | - | - | - | - | - | - |
| | Dicvclopentadiene resin *10 | | - | - | - | - | - | - | - |
| | Rosin resin *11 | Parts by mass | - | - | - | - | - | - | - |
| | Alkyl phenolic resin *12 | | - | - | - | - | - | - | - |
| Tread rubber formulation | Terpene phenolic resin *13 | | - | - | - | - | - | - | - |
| | Petroleum-based oil *14 | | 2 | 2 | - | - | 2 | 2 | 2 |
| | Natural product-based oil *15 | | - | - | 2 | 17 | - | - | - |
| | Antioxidant *16 | | 1 | 1 | 1 | 1 | 1 | 1 | 1 |
| | Stearic acid | | 1 | 1 | 1 | 1 | 1 | 1 | 1 |
| | Zinc oxide | | 2.5 | 2.5 | 2.5 | 2.5 | 2.5 | 2.5 | 2.5 |
| | Vulcanization accelerator A *17 | | 0.8 | 0.8 | 0.8 | - | - | 0.8 | 0.8 |
| | Vulcanization accelerator B *18 | | 1.1 | 1.1 | 1.1 | - | - | 1.1 | 1.1 |
| | Vulcanization accelerator C *19 | | 1 | 1 | 1 | - | - | 1 | 1 |
| | Vulcanization accelerator D *20 | | - | - | - | 2.1 | 2.1 | - | - |
| | Sulfur | | 1.9 | 1.9 | 1.9 | 1.9 | 1.9 | 1.9 | 1.9 |
| | Percentage of isoprene-based rubber in rubber component | Mass% | 100 | 100 | 100 | 100 | 100 | 100 | 40 |
| | Percentage of silica in filler | | 90.9 | 90.9 | 90.9 | 80.0 | 90.9 | 90.9 | 90.9 |
| | Organic acid content | Mass% | 2.3 | 2.3 | 2.3 | 2.3 | 2.3 | 2.3 | 1.5 |
| | Total amount of vulcanization accelerators | Parts by mass | 2.9 | 2.9 | 2.9 | 2.1 | 2.1 | 2.9 | 2.9 |
| Tread physical properties | tan δ_{0°C} | - | 0.327 | 0.548 | 0.413 | 0.346 | 0.311 | 0.356 | 0.330 |
| | tan δ_{30°C} | | 0.232 | 0.227 | 0.213 | 0.212 | 0.183 | 0.192 | 0.180 |
| | tan δ_{60°C} | | 0.148 | 0.208 | 0.169 | 0.163 | 0.140 | 0.147 | 0.130 |
| | tan δ_{0°C} - tan δ_{30°C} | | 0.095 | 0.321 | 0.200 | 0.134 | 0.128 | 0.164 | 0.150 |
| | tan δ_{30°C} - tan δ_{60°C} | | 0.083 | 0.019 | 0.044 | 0.049 | 0.043 | 0.045 | 0.050 |
| | E'_{0°C} | MPa | 25.2 | 15.5 | 13.2 | 10.7 | 9.8 | 11.3 | 35.0 |
| | Tb | | 25.0 | 25.0 | 25.1 | 22.2 | 24.2 | 24.9 | 28.6 |
| Tire frame material | | | Rubber | Rubber | Rubber | Rubber | Rubber | Rubber | Rubber |
| Material of coating layer of reinforcement layer | | | Rubber | Rubber | Rubber | Rubber | Rubber | Rubber | Rubber |
| Tire evaluation results | Normal temperature fuel efficiency | - | B | C | B | B | A | B | B |
| | Low temperature fuel efficiency | | D | D | B | B | A | B | C |
| | Normal temperature fuel efficiency - low temperature fuel efficiency | | D | A | A | A | A | A | B |
| | Wet performance | Index value | 107 | 179 | 133 | 137 | 136 | 141 | 97 |
| | Handling performance on dry road surface | - | B | C | C | C | C | C | B |
| | Ride comfort | | B | B | B | A | A | A | B |

| | | | | | | | | | |
|---|---|---|---|---|---|---|---|---|---|
| *1 to *20: Same as in Tables 1-3 | | | | | | | | | |

It can be seen from comparison of Tables 6-8 and Tables 11-13 that in a situation in which the same tread rubber is used, handling performance of the tire on a dry road surface is improved through use of a resin composition (resin material 100 mass%) in the coating layer of the reinforcement member in the reinforcement layer.

### INDUSTRIAL APPLICABILITY

According to the present disclosure, it is possible to provide a tire having good fuel efficiency that, even though a resin material is used therein, has improved ride comfort and dry handling performance without deterioration of wet performance.

### REFERENCE SIGNS LIST

- 10: Tire frame
- 11: Bead portion
- 12: Side portion
- 13: Crown portion
- 14: Bead core
- 20: Reinforcement layer
- 21: Reinforcement member
- 22: Coating layer
- 30: Tread rubber

## Claims

1. A tire comprising:
a tire frame (10) having an annular shape;
a reinforcement layer (20) located outward of the tire frame (10) in a tire radial direction; and
tread rubber (30) located outward of the reinforcement layer (20) in the tire radial direction, wherein
the reinforcement layer (20) includes a reinforcement member (21) that is coated with a resin composition containing from 50 mass% to 100 mass% of a resin material,
**characterized in that** a storage modulus (E'_{0°C}) of the tread rubber (30) during 1% strain at 0°C under conditions of an initial load of 160 mg and a frequency of 52 Hz is no greater than 30 MPa, a loss tangent (tan δ_{0°C}) of the tread rubber (30) during 1% strain at 0°C under conditions of an initial load of 160 mg and a frequency of 52 Hz is no greater than 0.5, and a value (tan δ_{30°C} - tan δ_{60°C}) obtained by subtracting a loss tangent (tan δ_{60°C}) of the tread rubber (30) during 1% strain at 60°C under conditions of an initial load of 160 mg and a frequency of 52 Hz from a loss tangent (tan δ_{30°C}) of the tread rubber (30) during 1% strain at 30°C under conditions of an initial load of 160 mg and a frequency of 52 Hz is no greater than 0.08.

2. The tire of claim 1, wherein
a rubber composition containing from 5 parts by mass to 40 parts by mass in total of at least one selected from the group consisting of a thermoplastic resin and a softener relative to 100 parts by mass of a rubber component including at least 50 mass% of at least one isoprene-based rubber selected from the group consisting of natural rubber and synthetic isoprene rubber is used in the tread rubber (30).

3. The tire of claim 2, wherein
the rubber composition used in the tread rubber (30) has an organic acid content of from 0.5 mass% to 2.5 mass%.

4. The tire of claim 2 or 3, wherein
the rubber composition used in the tread rubber (30) contains from 0.3 parts by mass to 5.0 parts by mass of a vulcanization accelerator relative to 100 parts by mass of the rubber component.

5. The tire of any one of claims 2 to 4, wherein
the rubber composition used in the tread rubber (30) contains a filler including at least 70 mass% of silica.

6. The tire of any one of claims 1 to 5, wherein
a value (tan δ_{0°C} - tan δ_{30°C}) obtained by subtracting the loss tangent (tan δ_{30°C}) of the tread rubber (30) during 1% strain at 30°C from the loss tangent (tan δ_{0°C}) of the tread rubber (30) during 1% strain at 0°C is no greater than 0.30.

7. The tire of any one of claims 1 to 6, wherein
a value (tan δ_{0°C} - tan δ_{60°C}) obtained by subtracting the loss tangent (tan δ_{60°C}) of the tread rubber (30) during 1% strain at 60°C from the loss tangent (tan δ_{0°C}) of the tread rubber (30) during 1% strain at 0°C is no greater than 0.35.

8. The tire of any one of claims 2 to 7, wherein
the rubber composition used in the tread rubber (30) contains from 1 part by mass to 5 parts by mass of the softener relative to 100 parts by mass of the rubber component.

9. The tire of any one of claims 2 to 8, wherein
the softener contained in the rubber composition used in the tread rubber (30) is a mineral-derived softener or a petroleum-derived softener.

10. The tire of any one of claims 5 to 9, wherein
the rubber composition used in the tread rubber (30) contains from 40 parts by mass to 70 parts by mass of the silica relative to 100 parts by mass of the rubber component.

11. The tire of any one of claims 5 to 10, wherein
the filler contained in the rubber composition used in the tread rubber (30) further includes carbon black and the carbon black is contained in an amount of from 1 part by mass to 10 parts by mass relative to 100 parts by mass of the rubber component.

12. The tire of any one of claims 2 to 11, wherein
the thermoplastic resin contained in the rubber composition used in the tread rubber (30) is at least one resin selected from the group consisting of a C₅ resin, a C₉ resin, a C₅-C₉ resin, a dicyclopentadiene resin, a rosin resin, an alkyl phenolic resin, and a terpene phenolic resin.

13. The tire of any one of claims 1 to 12, wherein
the reinforcement layer (20) includes at least a reinforcement member (21) that is wound in a tire circumferential direction.

14. The tire of any one of claims 1 to 13, wherein
the tire frame (10) is formed from a resin composition containing from 50 mass% to 100 mass% of a resin material.

15. The tire of any one of claims 1 to 14, wherein
either or both of the reinforcement layer (20) and the tire frame (10) are formed using a resin composition that contains at least one of a thermoplastic resin and a thermoplastic elastomer.

16. The tire of claim 15, wherein
the at least one of the thermoplastic resin and the thermoplastic elastomer contained in the resin composition used in either or both of the reinforcement layer (20) and the tire frame (10) is polyamide based, polyester based, or polyurethane based.

## Patentansprüche

1. Reifen umfassend:
einen Reifenrahmen (10), der eine ringförmige Gestalt aufweist;
eine Verstärkungsschicht (20), die sich vom Reifenrahmen (10) in einer radialen Reifenrichtung nach außen gerichtet befindet; und
Profilkautschuk (30), der sich von der Verstärkungsschicht (20) in reifenradialer Richtung nach außen gerichtet befindet, wobei
die Verstärkungsschicht (20) ein Verstärkungselement (21) umfasst, das mit einer Harzzusammensetzung beschichtet ist, die 50 Masse-% bis 100 Masse-% eines Harzmaterials enthält,
**dadurch gekennzeichnet, dass** ein Speichermodul (E'_{0°C}) des Profilkautschuks (30) während 1 % Belastung bei 0 °C unter Bedingungen einer anfänglichen Ladung von 160 mg und einer Frequenz von 52 Hz nicht höher als 30 MPa ist, eine Verlusttangente (tan δ_{0°C}) des Profilkautschuks (30) während 1 % Belastung bei 0 °C unter Bedingungen einer anfänglichen Ladung von 160 mg und einer Frequenz von 52 Hz nicht höher als 0,5 ist und ein Wert (tan δ_{30°C} - tan δ_{60°C}), der durch Abziehen einer Verlusttangente (tan δ_{60°C}) des Profilkautschuks (30) während 1 % Belastung bei 60 °C unter Bedingungen einer anfänglichen Ladung von 160 mg und einer Frequenz von 52 Hz von einer Verlusttangente (tan δ_{30°C}) des Profilkautschuks (30) während 1 % Belastung bei 30 °C unter Bedingungen einer anfänglichen Ladung von 160 mg und einer Frequenz von 52 Hz nicht höher als 0,08 ist.

2. Reifen nach Anspruch 1, wobei
eine Kautschukzusammensetzung, die insgesamt 5 Masseteile bis 40 Masseteile mindestens eines enthält ausgewählt aus der Gruppe bestehend aus einem thermoplastischen Harz und einem Weichmacher, mit Bezug auf 100 Masseteile einer Kautschukkomponente, die mindestens 50 Masse-% von mindestens einem Kautschuk auf der Basis von Isopren umfasst ausgewählt aus der Gruppe bestehend aus Naturkautschuk und synthetischem Isoprenkautschuk, in dem Profilkautschuk (30) verwendet wird.

3. Reifen nach Anspruch 2, wobei
die Kautschukzusammensetzung, die in dem Profilkautschuk (30) verwendet wird, einen Gehalt an organischer Säure von 0,5 Masse-% bis 2,5 Masse-% aufweist.

4. Reifen nach Anspruch 2 oder 3, wobei
die Kautschukzusammensetzung, die in dem Profilkautschuk (30) verwendet wird, 0,3 Masseteile bis 5,0 Masseteile eines Vulkanisationsbeschleunigers mit Bezug auf 100 Masseteile der Kautschukkomponente enthält.

5. Reifen nach einem der Ansprüche 2 bis 4, wobei
die Kautschukzusammensetzung, die in dem Profilkautschuk (30) verwendet wird, einen Füllstoff enthält, der mindestens 70 Masse-% Siliciumdioxid umfasst.

6. Reifen nach einem der Ansprüche 1 bis 5, wobei
ein Wert (tan δ_{0°C} - tan δ_{30°C}), der durch Abziehen der Verlusttangente (tan δ_{30°C}) des Profilkautschuks (30) während 1 % Belastung bei 30 °C von der Verlusttangente (tan δ_{0°C}) des Profilkautschuks (30) während 1 % Belastung bei 0 °C erhalten wird, in Linz sieben nicht höher als 0,30 ist.

7. Reifen nach einem der Ansprüche 1 bis 6, wobei
ein Wert (tan δ_{0°C} - tan δ_{60°C}), der durch Abziehen der Verlusttangente (tan δ_{60°C}) des Profilkautschuks (30) während 1 % Belastung bei 60 °C von der Verlusttangente (tan δ_{0°C}) des Profilkautschuks (30) während 1 % Belastung bei 0 °C erhalten wird, auch nicht höher als 0,35 ist.

8. Reifen nach einem der Ansprüche 2 bis 7, wobei
die Kautschukzusammensetzung, die in dem Profilkautschuk (30) verwendet wird, 1 Masseteil bis 5 Masseteile des Weichmachers mit Bezug auf 100 Masseteile der Kautschukkomponente enthält.

9. Reifen nach einem der Ansprüche 2 bis 8, wobei
der Weichmacher, der in der Kautschukzusammensetzung enthalten ist, die in dem Profilkautschuk (30) verwendet wird, ein von Mineral abgeleiteter Weichmacher oder ein von Petroleum abgeleiteter Weichmacher ist.

10. Reifen nach einem der Ansprüche 5 bis 9, wobei
die Kautschukzusammensetzung, die in dem Profilkautschuk (30) verwendet wird, 40 Masseteile bis 70 Masseteile des Siliciumdioxids, auf 100 Masseteile der Kautschukkomponente bezogen, enthält.

11. Reifen nach einem der Ansprüche 5 bis 10, wobei
der Füllstoff, der in der Kautschukzusammensetzung enthalten ist, die in dem Profilkautschuk (30) verwendet wird, ferner Ruß umfasst und der Ruß in einer Menge von 1 Masseteile bis 10 Masseteilen, mit Bezug auf 100 Masseteile der Kautschukkomponente enthalten ist.

12. Reifen nach einem der Ansprüche 2 bis 11, wobei
das thermoplastische Harz, das in der Kautschukzusammensetzung enthalten ist, die in dem Profilkautschuk (30) verwendet wird, mindestens ein Harz ist ausgewählt aus der Gruppe bestehend aus einem C₅-Harz, einem C₉-Harz, einem C₅-C₉-Harz, einem Dicyclopentadienharz, einem Kolophoniumharz, einem phenolischen Alkylharz und einem phenolischen Terpenharz.

13. Reifen nach einem der Ansprüche 1 bis 12, wobei
die Verstärkungsschicht (20) mindestens ein Verstärkungselement (21) umfasst, das in einer zirkumferentiellen Reifenrichtung gewickelt ist.

14. Reifen nach einem der Ansprüche 1 bis 13, wobei
der Reifenrahmen (10) aus einer Harzzusammensetzung gebildet wird, die 50 Masse-% bis 100 Masse-% eines Harzmaterials enthält.

15. Reifen nach einem der Ansprüche 1 bis 14, wobei
eines oder beide von der Verstärkungsschicht (20) und dem Reifenrahmen (10) unter Anwendung einer Harzzusammensetzung gebildet wird/werden, die mindestens eines von einem thermoplastischen Harz und einem thermoplastischen Elastomer enthält.

16. Reifen nach Anspruch 15, wobei
das mindestens eine von dem thermoplastischen Harz und dem thermoplastischen Elastomer, das in der Harzzusammensetzung enthalten ist, die in einem oder beiden von der Verstärkungsschicht (20) und dem Reifenrahmen (10) verwendet wird, auf Polyamid basiert, Polyester basiert oder Polyurethan basiert.

## Revendications

1. Pneumatique comprenant:
une carcasse de pneumatique (10) ayant une forme annulaire;
une couche de renforcement (20) localisée à l'extérieur de la carcasse de pneumatique (10) dans un sens radial du pneumatique; et
le caoutchouc de bande de roulement (30) localisé à l'extérieur de la couche de renforcement (20) dans le sens radial du pneumatique, où
la couche de renforcement (20) comprend un élément de renforcement (21) qui est revêtu d'une composition de résine contenant de 50 % en masse à 100 % en masse d'un matériau de résine,
**caractérisé en ce qu'**un module de stockage (E'_{0°C}) du caoutchouc de bande de roulement (30) durant une contrainte de 1 % à 0°C sous les conditions d'une charge initiale de 160 mg et une fréquence de 52 Hz n'est pas supérieure à 30 MPa, une tangente de perte (tan δ_{0°c}) du caoutchouc de bande de roulement (30) sous une contrainte de 1 % à 0°C sous les conditions d'une charge initiale de 160 mg et une fréquence de 52 Hz n'est pas supérieure à 0,5, et une valeur (tan δ_{30°c} - tan δ_{60°c}) obtenue par soustraction d'une tangente de perte (tan δ_{60°c}) du caoutchouc de bande de roulement (30) sous une contrainte de 1 % à 60°C sous les conditions d'une charge initiale de 160 mg et une fréquence de 52 Hz à partir d'une tangente de perte (tan δ_{30°C}) du caoutchouc de bande de roulement (30) durant une contrainte de 1 % à 30°C sous les conditions d'une charge initiale de 160 mg et une fréquence de 52 Hz n'est pas supérieure à 0,08.

2. Pneumatique selon la revendication 1, dans lequel
une composition de caoutchouc contenant de 5 parties en masse à 40 parties en masse au total d'au moins l'un sélectionné dans le groupe constitué d'une résine thermoplastique et d'un agent de ramollissement par rapport à 100 parties en masse d'un composant de caoutchouc comprenant au moins 50 % en masse d'au moins un caoutchouc à base d'isoprène sélectionné dans le groupe constitué du caoutchouc d'origine naturelle et du caoutchouc d'isoprène synthétique est utilisé dans le caoutchouc de bande de roulement (30).

3. Pneumatique selon la revendication 2, dans lequel
la composition de caoutchouc utilisée dans le caoutchouc de bande de roulement (30) présente une teneur en acide organique de 0,5 % en masse à 2,5 % en masse.

4. Pneumatique selon la revendication 2 ou 3, dans lequel
la composition de caoutchouc utilisée dans le caoutchouc de bande de roulement (30) contient de 0,3 partie en masse à 5,0 parties en masse d'un accélérateur de vulcanisation par rapport à 100 parties en masse du composant de caoutchouc.

5. Pneumatique selon l'une quelconque des revendications 2 à 4, dans lequel
la composition de caoutchouc utilisée dans le caoutchouc de bande de roulement (30) contient une charge comprenant au moins 70 % en masse de silice.

6. Pneumatique selon l'une quelconque des revendications 1 à 5, dans lequel
une valeur (tan δ_{0°c} - tan δ_{30°C}) obtenue par soustraction de la tangente de perte (tan δ_{30°C}) du caoutchouc de bande de roulement (30) durant une contrainte de 1 % à 30°C à partir de la tangente de perte (tan δ_{0°c}) du caoutchouc de bande de roulement (30) durant une contrainte de 1 % à 0°C n'est pas supérieure à 0,30.

7. Pneumatique selon l'une quelconque des revendications 1 à 6, dans lequel
une valeur (tan δ_{0°c} - tan δ_{60°c}) obtenue par soustraction de la tangente de perte (tan δ_{60°c}) du caoutchouc de bande de roulement (30) durant une contrainte de 1 % à 60°C à partir de la tangente de perte (tan δ_{0°c}) du caoutchouc de bande de roulement (30) durant une contrainte de 1 % à 0°C n'est pas supérieure à 0,35.

8. Pneumatique selon l'une quelconque des revendications 2 à 7, dans lequel
la composition de caoutchouc utilisée dans le caoutchouc de bande de roulement (30) contient de 1 partie en masse à 5 parties en masse de l'agent de ramollissement par rapport à 100 parties en masse du composant de caoutchouc.

9. Pneumatique selon l'une quelconque des revendications 2 à 8, dans lequel
l'agent de ramollissement contenu dans la composition de caoutchouc utilisée dans le caoutchouc de bande de roulement (30) est un agent de ramollissement d'origine minérale ou un agent de ramollissement dérivé du pétrole.

10. Pneumatique selon l'une quelconque des revendications 5 à 9, dans lequel
la composition de caoutchouc utilisée dans le caoutchouc de bande de roulement (30) contient de 40 parties en masse à 70 parties en masse de silice par rapport à 100 parties en masse du composant de caoutchouc.

11. Pneumatique selon l'une quelconque des revendications 5 à 10, dans lequel
la charge contenue dans la composition de caoutchouc utilisée dans le caoutchouc de bande de roulement (30) comprend en outre du noir de carbone et le noir de carbone est contenu en une quantité de 1 partie en masse à 10 parties en masse par rapport à 100 parties en masse du composant de caoutchouc.

12. Pneumatique selon l'une quelconque des revendications 2 à 11, dans lequel
la résine thermoplastique contenue dans la composition de caoutchouc utilisée dans le caoutchouc de bande de roulement (30) est au moins une résine sélectionnée dans le groupe constitué d'une résine en C₅, d'une résine en C₉, d'une résine en C₅ à C₉, d'une résine de dicyclopentadiène, d'une résine de colophane, d'une résine alkylique phénolique, et d'une résine terpène phénolique.

13. Pneumatique selon l'une quelconque des revendications 1 à 12, dans lequel
la couche de renforcement (20) comprend au moins un élément de renforcement (21) qui est enroulé dans un sens de la circonférence du pneumatique.

14. Pneumatique selon l'une quelconque des revendications 1 à 13, dans lequel
la carcasse de pneumatique (10) est formée à partir d'une composition de résine contenant de 50 % en masse à 100 % en masse d'un matériau de résine.

15. Pneumatique selon l'une quelconque des revendications 1 à 14, dans lequel
soit l'un soit les deux de la couche de renforcement (20) et de la carcasse de pneumatique (10) sont formées en utilisant une composition de résine qui contient au moins l'un d'une résine thermoplastique et d'un élastomère thermoplastique.

16. Pneumatique selon la revendication 15, dans lequel
ladite résine thermoplastique et ledit élastomère thermoplastique contenus dans la composition de résine utilisée dans l'un ou l'autre ou les deux de la couche de renforcement (20) et de la carcasse de pneumatique (10) est à base de polyamide, à base de polyester, ou à base de polyuréthane.
